# EUROPEAN PATENT SPECIFICATION

(11) **EP 2 555 049 B1**
(45) Date of publication and mention of the grant of the patent: **27.04.2016**
(21) Application number: 12178471.4
(22) Date of filing: 30.07.2012
(51) Int. Cl.: G02F 1/17, G09G 3/20, G09G 3/34

(54) **Suspended particle device, light control device using the same, and method for driving the same**
Vorrichtung mit Teilchensuspension, Lichtsteuerungsvorrichtung damit und Ansteuerungsverfahren dafür
Dispositif à particules en suspension, dispositif de contrôle d'éclairage l'utilisant et son procédé de commande

(30) Priority: 01.08.2011 JP 2011167974
(43) Date of publication of application: 06.02.2013
(73) Proprietor: Hitachi Chemical Co., Ltd., Shinjuku-ku, Tokyo 163-0449 (JP)
(72) Inventor: Mori, Shunsuke, Tokyo, 100-8220 (JP); Kaneko, Hiroki, Tokyo, 100-8220 (JP); Mikami, Yoshiro, Tokyo, 100-8220 (JP); Morishita, Yoshii, Tokyo, 163-0449 (JP)
(74) Representative: Beetz & Partner mbB

(56) References cited:
- WO-A1-99/53371
- JP-A- 2007 127 676

## Description

### Background of the Invention

### Field of the Invention

The present invention relates to a suspended particle device, a light control device using the same, and a method for driving the same.

### Description of the Related Arts

The following Japanese Patent Application Laid-Open Publication No. 2008-209953 discloses the following technology. In a display in which a cell is configured by sandwiching a dispersion system, in which particulates are dispersed, between substrates at least one of which is transparent and changing light transparency and light reflectivity in a vertical direction to the substrate of the cell by moving the particulates with an electric field, a black and white display and a color display having high transmittance, high contrast and driven with low voltage can be configured by slimness and lightweight and can be driven at a high speed by setting a pitch p between a driving electrode and a common electrode mounted so as to apply an electric field to be 5 µm to 100 µm, a cell thickness d to be 0.2 to 1.5 times higher than the pitch p, and an electrode area ratio of the driving electrode to be 20% or less, and as a result, can be variously applied to ultrahigh-definition optical modulation device, a display for a portable device, electronic paper, a large monitor, a large TV, an extra-large public display, and the like.

The following Japanese Patent Application Laid-Open Publication No. 2008-158040 discloses the following technology: a light control material containing an energy-ray curable polymer medium including a resin having ethylenically-unsaturated-bond and a photopolymerization initiator and a droplet of the light-control suspension dispersed in the disperse medium in a state in which the light-control particles can flow, in which a disperse medium in the light-control suspension may be phase-separated from the polymer medium, and the cured product and ethylenically-unsaturated-bond concentration resin of is 0.3 mol/kg to 0.5 mol/kg.
The document JP 2007 127676 A discloses a particle movement type display device having a transparent plane shape electrode on the front substrate and a pair of display electrodes on the back substrate. Document WO 99/53371 A1 discloses a display with encapsulated display media comprising a plurality of particles and a fluid.

### Summary Of the Invention

In Japanese Patent Application Laid-Open Publication No. 2008-209953, the cell is configured by sandwiching the disperse medium, in which the charged particulates are dispersed in a transparent liquid or a gas medium, between the substrates at least one of which is transparent, the particulate dispersion state in the cell is formed as the optical blocking state of the cell in a vertical direction to the substrate, and the particulates move in a horizontal direction to the substrate so as to be deposited in the micro wire shaped driving electrode by applying voltage between a common electrode mounted between the substrates and a driving electrode configured of a micro wire, thereby modulating the particulate quantity in the dispersed state and modulating the optical blocking state of the cell, that is, the transmittance. For this reason, when the optical blocking state is modulated, the uniformity of the optical blocking state may be lowered within the cell due to the difference in the particulate quantity in the electrode portion at which the particulates are deposited and other optical modulation portions. Further, in order to improve the uniformity of the optical blocking state, there may be problems such as a high cost of an electrode forming method, a short circuit, operation failure due to non-uniformity of the electrode and the like when the micro wire shaped driving electrode is fined.

In addition, in Japanese Patent Application Laid-Open Publication No. 2008-209953, the optical blocking state of the cell is modulated by moving the particulates in a horizontal direction to the substrate, but the responsiveness of the modulation operation is worsened when the inter-electrode distance becomes long so as to realize the driving for obtaining a high transmissive light quantity.

In the suspended particle device according to the related art, it is difficult to achieve both the holding of the transmissive state and the uniform optical modulation operation. The present invention has been made in an effort to obtain uniform optical characteristics within an optical operating unit of the suspended particle device while stopping and holding the suspended particle device in a transmissive state.

The invention is defined in claims 1 and 15. Preferred embodiments are defined in the dependent claims.

In order to address the problems, features of the present invention are as follows.
(1) The features as recited in claim 1.
(2) A width of a minor-axis direction of the third electrode may be smaller than that of the second electrode.
(3) The light-control particle may be in a rod shape, and the light-control particle may be composed of at least one of a polyperiodide, a polymer, a carbon-base material, a metal material, and an inorganic compound.
(4) The light-control particle may be charged with negative charges, the light-control particles may be biased to the third electrode by making potential of the third electrode larger than potential of the first electrode and potential of the second electrode, and the light-control particles biased to the third electrode may be dispersed in the suspension by making the potential of the first electrode larger than the potential of the third electrode.
(5) An electrification control agent may be added to the suspension, and the electrification control agent may be a metal salt of fatty acid.
(6) When the light-control particles are biased to the third electrode, DC voltage may be applied to the third electrode at a predetermined interval.
(7) When the light-control particles are biased to the third electrode, the particles biased to the third electrode may be dispersed in the disperse medium by applying AC voltage to at least one of the first electrode, the second electrode, and the third electrode.
(8) The suspended particle device may further include a dielectric layer covering the third electrode.
(9) An apertural area may be mounted in the dielectric layer and the light-control particles may be biased to the apertural area of the dielectric layer on the third electrode.
(10) The second electrode may be formed on the dielectric layer, the apertural area may be mounted in the second electrode on the third electrode, and the light-control particles may be biased to the apertural area of the second electrode.
(11) A plurality of ribs may be formed between the first substrate and the second substrate, and the second electrode and the third electrode may be mounted in each space partitioned into the plurality of ribs.
(12) The second electrode and the third electrode may be formed in a stripe shape, and the orientation state of the light-control particles may be controlled by applying AC voltage between the second electrode and the third electrode.
(13) When AC voltage is applied between the second electrode and the third electrode, light incident to the suspension may be polarized by the light-control particles.
(14) In the above description, a light control device includes a drive device that controls the suspended particle device.
(15) The features as recited in claim 15.

According to the present invention, it is possible to stop and hold the suspended particle device in the transmissive state and obtain the uniform optical characteristics within the optical operating unit of the suspended particle device. The foregoing problems, configurations, and effects will be apparent from the description of the following embodiments.

### Brief Description of the Drawings

FIG. 1 is an exploded perspective view showing a configuration of a suspended particle device according to an embodiment;
FIG. 2A is a cross section view showing the configuration of the suspended particle device of FIG. 1;
FIG. 2B is a cross section view showing the configuration of the suspended particle device of FIG. 1;
FIG. 3 is a diagram for describing a configuration of a light control device using the suspended particle device according to the embodiment;
FIG. 4 is a view for describing a configuration of a method for driving the suspended particle device according to the embodiment;
FIG. 5A is a view for describing a light-control particle state in a light-blocking state and an optical path of incident light, in the suspended particle device of FIGS. 1, 2A and 2B;
FIG. 5B is a view for describing a light-control particle state in a light-control state and the optical path of incident light, in the suspended particle device of FIGS. 1, 2A and 2B;
FIG. 5C is a view for describing a light-control particle state in a transmissive hold state and the optical path of incident light, in the suspended particle device of FIGS. 1, 2A and 2B;
FIG. 6A is a diagram for describing a driving waveform performing control for changing the light-blocking state to the light-control state and the light-control state to the light-blocking state, in a light-control device of an embodiment;
FIG. 6B is a diagram for describing a driving waveform performing control for changing the light-blocking state and the light-control state to the transmissive hold state, in the light control device according to an embodiment;
FIG. 6C is a diagram for describing a driving waveform performing control for changing the transmissive hold state to the light-blocking state and the light-control state, in the light control device according to the embodiment;
FIG. 7 is a diagram for describing a configuration of a light control device using a suspended particle device and an auxiliary power according to an embodiment;
FIG. 8 is a diagram for describing a driving waveform performing control for changing the light-blocking state and the light-control state to the transmissive hold state, in the suspended particle device of FIGS. 1, 2A and 2B and the light control device of FIG. 7;
FIG. 9 is a diagram for describing a driving waveform performing control for changing the transmissive-hold state to the light-blocking state and the light-control state, in the light control device according to the embodiment;
FIG. 10 is an exploded perspective view showing a configuration of the suspended particle device according to the embodiment;
FIG. 11A is a cross section view showing a configuration of the suspended particle device of FIG. 10;
FIG. 11B is a cross section view showing a configuration of the suspended particle device of FIG. 10;
FIG. 11C is a cross section view showing a configuration of the suspended particle device of FIG. 10;
FIG. 12 is an exploded perspective view showing a configuration of the suspended particle device according to the embodiment;
FIG. 13A is a cross section view showing a configuration of the suspended particle device of FIG. 12;
FIG. 13B is a cross section view showing a configuration of the suspended particle device of FIG. 12;
FIG. 13C is a cross section view showing a configuration of the suspended particle device of FIG. 12;
FIG. 14 is an exploded perspective view showing a configuration of the suspended particle device according to the embodiment;
FIG. 15A is a cross section view showing a configuration of the suspended particle device of FIG. 14;
FIG. 15B is a cross section view showing a configuration of the suspended particle device of FIG. 14;
FIG. 15C is a cross section view showing a configuration of the suspended particle device of FIG. 14;
FIG. 16 is a diagram for describing a configuration of a light control device using a suspended particle device according to an embodiment;
FIG. 17 is an exploded perspective view showing a configuration of the suspended particle device according to the embodiment;
FIG. 18A is a cross section view of a configuration of the suspended particle device of FIG. 17;
FIG. 18B is a cross section view of a configuration of the suspended particle device of FIG. 17;
FIG. 18C is a cross section view of a configuration of the suspended particle device of FIG. 17;
FIG. 19 is an exploded perspective view showing a configuration of the suspended particle device according to the embodiment;
FIG. 20A is a cross section view showing a configuration of the suspended particle device of FIG. 19;
FIG. 20B is a cross section view showing a configuration of the suspended particle device of FIG. 19;
FIG. 20C is a cross section view showing a configuration of the suspended particle device of FIG. 19;
FIG. 21 is an exploded perspective view of a configuration of the suspended particle device according to the embodiment;
FIGS. 22A and 22B are cross section views showing a configuration of the suspended particle device of FIG. 21;
FIG. 23A is a cross section view of a light-control particle state in the light-blocking state and an optical path of incident light, in the suspended particle device of FIGS. 21, 22A and 22B;
FIG. 23B is a cross section view of a light-control particle state in the light-control state and an optical path of incident light, in the suspended particle device of FIGS. 21, 22A and 22B;
FIG. 23C is a cross section view of a light-control particle state in the transmissive hold state and an optical path of incident light, in the suspended particle device of FIGS. 21, 22A and 22B;
FIG. 24A is a top structure diagram for describing a light-control particle state in the light-blocking state, in the suspended particle device of FIGS. 21, 22A and 22B;
FIG. 24B is a top structure diagram for describing a light-control particle state in the light-control state, in the suspended particle device of FIGS. 21, 22A and 22B;
FIG. 24C is a top structure diagram for describing a light-control particle state in the transmissive hold state, in the suspended particle device of FIGS. 21, 22A and 22B;
FIG. 25 is a diagram for describing a driving waveform performing control for changing the light-blocking state and the light-control state to the transmissive hold state, in the suspended particle device of FIGS. 21, 22A and 22B and the light control device of FIG. 7;
FIG. 26 is an exploded perspective view showing a configuration of the suspended particle device according to the embodiment;
FIG. 27 is a cross section view showing a configuration of the suspended particle device of FIG. 26;
FIG. 28A is a cross section view for describing a light-control particle state and an optical path of incident light in a high light-blocking state, in the suspended particle device of FIGS. 26 and 27;
FIG. 28B is a cross section view for describing a light-control particle state and an optical path of incident light in a polarized light state, in the suspended particle device of FIGS. 26 and 27;
FIG. 29 is a graph of a transmissive rate of variability ΔT to a change in transmittance of 100 V form AC voltage V_{ON} = 0 V in the light-blocking state and the light-control state, in the suspended particle device of FIGS. 1, 2A and 2B;
FIG. 30 is a graph of the transmissive rate of variability ΔT to a change in transmittance when DC voltage V_{C1} from 0 V to 50 V is applied to a Z electrode 8, based on the change in transmittance of 100 V from the AC voltage V_{ON} = 0 V in FIG. 29, in the suspended particle device of FIGS. 1, 2A and 2B; and
FIG. 31 is a graph showing the transmissive rate of variability ΔT to the change in transmittance when being driven in the light-blocking state, the light-control state, and the transmissive hold state using the driving waveform of FIG. 6, based on the change in transmittance of 100 V from AC voltage V_{ON} = 0 V, in the suspended particle device of FIGS. 1, 2A and 2B.

### Detailed Description of the Preferred Embodiments

Hereinafter, detailed embodiments of the present invention will be described and contents of the present invention will be described in detail. The following embodiments show detailed embodiments of the present invention, but the present invention is not limited to these embodiments, and may be variously changed and modified by those skilled in the art within the scope of the appended claims. Further, throughout the drawings for describing the embodiments, like components are denoted by like reference numerals and the repeated description thereof will be omitted.

### [First Embodiment]

### (SPD)

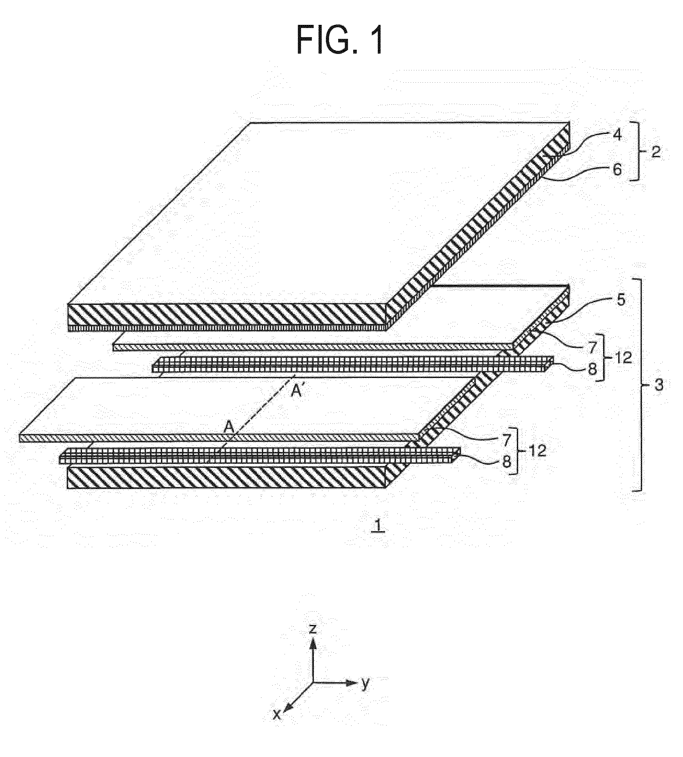

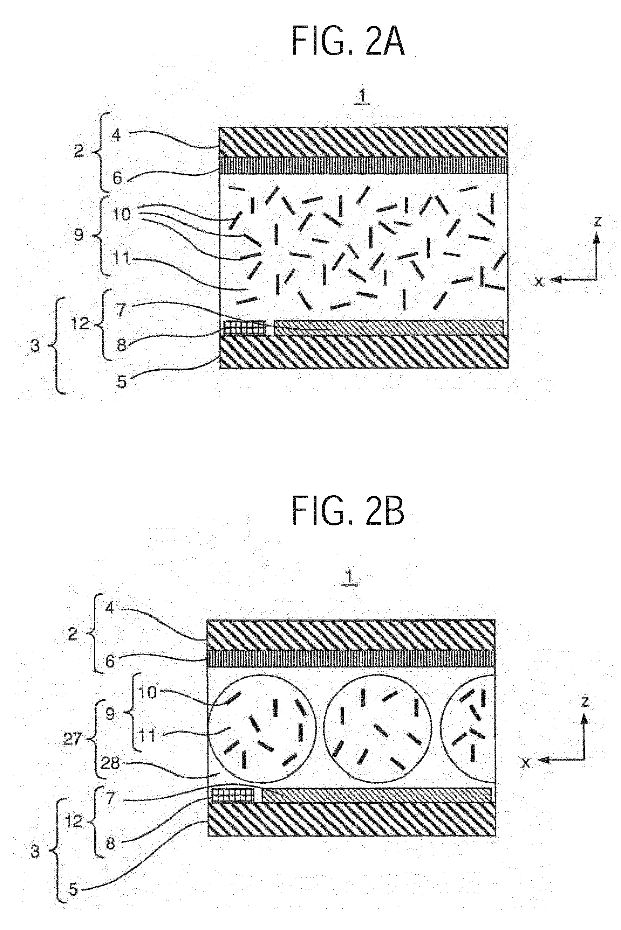

For easily understanding the present embodiment, a basic structure, and the like, of an SPD reviewed by the present inventors will be described. A suspended particle device (SPD) 1 includes an A plate 2, a B plate 3, and a suspension 9 composed of light-control particles 10 and a disperse medium 11. Further, according to the present embodiment, in two substrates disposed to face each other and configuring the SPD 1, that is, the 'A plate 2' and the 'B plate 3', a substrate on which an X electrode 6 is mounted is defined as the A plate 2 and a substrate on which a Y electrode 7 and a Z electrode 8 are mounted is defined as the B plate 3. FIG. 1 is a view schematically showing a cross section structure of the SPD 1 reviewed by the present inventors. FIGS. 2A and 2B are cross section views of the SPD 1 taken along line AA shown in FIG. 1 after the SPD 1 is assembled, based on an x-z plane. In FIG. 1, a direction in which the Z electrode 8 is sandwiched into the Y electrode 7 or the Y electrode 7 is sandwiched into the Z electrode 8 is defined as an x-axis direction. In FIG. 1, a minor-axis direction of the Y electrode 7 and the Z electrode 8 is defined as an x-axis direction. The suspension 9 is sandwiched between the A plate 2 and the B plate 3. The SPD 1 according to the present embodiment controls incident light in a Z-axis direction with respect to the SPD 1.

First, a conductive base and a method for forming the same will be described below. In the A plate 2 and the B plate 3, an X electrode 6, a Y electrode 7, and a Z electrode 8 of the transparent electrode composed of indium tin oxide (ITO) are each formed on an A substrate 4 and a B substrate 5 that are a transparent support base. The X electrode 6 is formed on one surface of the A substrate 4. The X electrode 6 may be mounted in a stripe shape, like a YZ electrode pair 12. It is possible to simplify complexity due to patterning by forming the X electrode 6 on one surface thereof. The Y electrode 7 and the Z electrode 8 having a narrower width in an x-axis direction than the Y electrode 7 are formed on the B substrate 5. That is, the suspension 9 is sandwiched between the A plate 2 and the B plate 3. Further, in the present embodiment, the width of the Z electrode 8 in the x-axis direction is set to be in a range preferably between 10 µm and 100 µm so as to increase transmittance in a transmissive hold state to be described below, and more preferably between 10 µm and 50 µm so as to degrade visibility of the Z electrode 8. Meanwhile, in the present embodiment, the width of the Y electrode 7 in the x-axis direction is set to be in a range between 5 µm and 1000 µm and preferably 10 µm and 1000 µm when a light control layer 27 having a capsule shape as shown in FIG. 2B becomes large, and is set to be in a range between 5 µm and 1000 µm and preferably between 10 µm and 300 µm, which may depend on resistance and viscosity of the suspension 9 and the disperse medium 11 and concentration of the light-control particle 10, but may realize the driving method to be described below. In the present embodiment, the width in the x-axis direction of the Z electrode 8 is set to be 10 µm and the width in the x-axis direction in the Y electrode 7 is set to be 50 µm. In addition, an interval between the Y electrode 7 and the Z electrode 8 is set to be 10 µm in the present embodiment so as to widely obtain the controllable area of the light-control particle 10 in the light-control state to be described below. Therefore, in the present embodiment, a ratio of the width of the Y electrode, the width of the Z electrode 8, and an interval between the Y electrode 7 and the Z electrode 8 in the x-axis direction is 1 : 5 : 1.

The transparent support base may be a resin film of polyethylene terephthalate (PET), polycarbonate (PC), a cyclo-olefin polymer (COP), and the like. The X electrode 6, the Y electrode 7, and the Z electrode 8 may be composed of indium zinc oxide (IZO), tin oxide, and zinc oxide, or a transparent conductor such as carbon nano tube, graphene, and the like. The Z electrode 8 may be formed of a single layer or a stacked layer made of metals such as chrome, copper, aluminum, silver, and the like, and an alloy thereof or may also be provided with an ultrafine wire of metals such as copper, a copper alloy, and the like. Further, in the present embodiment, the X electrode 6 is formed on one surface of the support base and the YZ electrode pair 12 configured of the Y electrode 7 and the Z electrode 8 is mounted in a stripe shape, but the present embodiment is not limited thereto, and the YZ electrode pair 12 may be mounted to meet shapes such as a circle, and the like, or shapes such as character shape, and the like.

Next, the A plate 2 and the B plate 3 are disposed to face each other and are bonded to each other by coating a sealant including spacer beads on both sides of ends (not shown) thereof. Therefore, a suspension charge space of the suspension 9 in which a distance between both plates is 25 µm is formed. Further, the distance between the suspension charge space and both plates are in a range between 3 µm and 100 µm. In addition, the spacer beads may be scattered between the A plate 2 and the B plate 3 and the suspension charge space may be kept. Examples of the spacer beads may include glass, a polymer, and the like, and the spacer beads are preferably stable with respect to an adhesive. Furthermore, when the spacer beads are scattered between the A plate 2 and the B plate 3, a refractive index of the spacer beads preferably approximates to that of the disperse medium 11.

The suspension 9 and the method for forming the same will be described below. The suspension 9 includes the light-control particles 10 and the disperse medium 11. The light-control particles 10 are dispersed in the disperse medium 11.

The light-control particles 10 are, for example, polyperiodide, have an anisometric shape, exhibit optical anisotropy having different absorbance due to orientation, have a shape in which an aspect ratio is not 1, and are charged with negative charge. The light-control particles 10 preferably generate orientation polarization in a frequency of AC voltage or a frequency below the frequency during a driving period of the suspended particle device 1. In this case, a dielectric material having low conductivity is preferably used as the light-control particles 10. Examples of the dielectric materials having low conductivity may include polymer particles, particles coated with a polymer, and the like. Examples of the light-control particle 10 may include a rod shape, a needle shape, a cylinder shape, a plate shape, and the like. It is possible to suppress an increase in resistance of rotating motion of the light-control particle 10 for an electric field or an increase in haze at the time of transmission by forming the light-control particles 10 in a rod shape. The aspect ratio of the light-control particle 10 is preferably about 5 to 30. The optical anisotropy may be exhibited due to the shape of the light-control particle 10 by being set the aspect ratio of the light-control particle 10 to be 5 or more and preferably 10 or more.

The size of the light-control particle 10 is set to be preferably 1 µm or less, more preferably in a range between 0.1 µm and 1 µm, and more preferably a range between 0.1 µm and 0.6 µm. There may be problems such as degradation in optical characteristics or driving characteristics in that when the size of the light-control particle 10 exceeds 1 µm, light scattering occurs or when an electric field is applied, the orientation motion in the disperse medium 11 is degraded, and the like. Further, the size of the light-control particle 10 is measured by an electron microscope, and the like.

Examples of the light-control particle 10 may be particles composed of carbon-base materials such as carbon black, and the like, metal materials such as copper, nickel, iron, cobalt, chrome, titanium, aluminum, and the like, inorganic compounds such as silicon nitride, titanium nitride, aluminum oxide, and the like, which are charged with positive or negative charges. Further, the carbon black, metal, and the like, are not charged with their own specific charges, but may be particles coated with a polymer having properties charged with the specific charges.

In the present embodiment, the concentration of the light-control particle 10 in the suspension 9 is set to be 1.0 wt%. Further, the concentration of the light-control particle 10 is concentration that does not prevent rotating motion, dispersion, aggregation, and biasing operations due to interaction with another light-control particle 10 and is preferably set to be in a range between 0.1 wt% and 20 wt%. When the concentration is smaller than 0.1 wt%, there is a need to manufacture a cell of a long gap so as to realize low transmittance at the time of blocking light and it is likely to increase voltage due to degradation in field intensity.

The disperse medium 11 is a liquid copolymer composed of acrylic acid ester oligomer. Another example of the disperse medium 11 may include polysiloxane (silicone oil), and the like. Further, as the disperse medium 11, it is preferable to use a liquid copolymer that has viscosity that can suspend the light-control particles 10, has high resistance, does not have affinity with the A substrate 4, the B substrate 5, and each electrode, has a refractive index approximating the A substrate 4 and the B substrate 5, and has different permittivity from the light-control particles 10. In detail, in 298K, resistivity of the disperse medium 11 is preferably set to be in a range between 10¹² Ωm and 10¹⁵ Ωm. When there is a difference in permittivity between the disperse medium 11 and the light-control particles 10, this may act as driving power under the AC field in the orientation operation of the light-control particle 10 to be described below. In the present embodiment, specific permittivity of the disperse medium 11 is set to be in a range between 3.5 and 5.0.

The suspension charge space is charged with the suspension 9 from ends of both plates that are not bonded to each other with a sealant by a capillary action. After the suspension 9 is filled between the A plate 2 and the B plate 3, ends of both plates that are not bonded to each other are bonded and sealed with the sealant. Therefore, the suspension 9 is isolated from the external devices. In addition, in the present embodiment, the suspension 9 is charged by the capillary action, but the suspension 9 is coated by a bar-coating method or one drop filling (ODF) under the vacuum before bonding the A plate 2 to the B plate 3 and then, the bonding and sealing may be performed by bonding the A plate 2 to the B plate 3.

A structure of the suspended particle device (SPD) 1 in the present experimental embodiment will be described with reference to FIG. 2B. Different contents from FIG. 2A will be described in detail. The suspended particle device SPD 1 includes a light control layer 27.

In FIG. 2B, the light control layer 27 has a capsule shape and the light control layer 27 includes the suspension 9 and a resin matrix 28. A thickness of the light control layer 27 is set to be in a range preferably between 5 µm and 1000 µm and more preferably between 20 µm and 100 µm.

The suspension 9 is dispersed in the resin matrix 28. The size (average droplet diameter) of the suspension 9 that is dispersed in the resin matrix 28 is generally set to be in a range between 0.5 µm and 100 µm, preferably between 0.5 µm and 20 µm, and more preferably between 1 µm and 5 µm.

The light-control particles 10 are preferably set to be in a range between 1 wt% and 70 wt%, the disperse medium 11 is preferably set to be in a range between 30 wt% and 99 wt%, the light-control particles 10 are more preferably set to be in a range between 4 wt% and 50 wt%, and the disperse medium 11 is more preferably set to be in a range between 50 wt% and 96 wt%.

The resin matrix 28 is a polymer that is cured by heating or irradiation with an energy ray and holds the A substrate 4, the B substrate 5, and the suspension 9 in the film type, and isolates among the X electrode 6, the Y electrode 7, and the Z electrode 8. Examples of the cured polymer medium may include liquid polymer compositions including a polymer initiator and a polymer compound silicon resin. The silicon resin is synthesized by performing dehydrogenating condensation and dealcoholization reaction on a silanol-both-terminated siloxane polymer such as silanol-both-terminated-polydimethyl siloxane, silanol-both-terminated polydiphenyl siloxane-dimethylsiloxane copolymer, and silanol-both-terminated polydimethyldipheynyl siloxane, trialkylalkoxysilance such as trimethylethoxysilane, and the like, ethylenically-unsaturated-bond-containing silane compounds such as (3-acryloxypropyl) methyldimethoxysilane, and the like, under the presence of an organic tin catalyst such as tin 2-ethylhexane. As the form of the silicon resin, a solvent-free form is preferably used. That is, when a solvent is used in the synthesis of the silicon, it is preferable to remove the solvent after the synthesis reaction.

It is preferable that the refractive index of the resin matrix 28 approximates the refractive index of the disperse medium 11. In detail, it is preferable that a difference between the refractive index of the resin matrix 28 and the refractive index of the disperse medium 11 is set to be 0.002 or less. Therefore, it is possible to suppress the scattering of the resin matrix 28 and the disperse medium 11 within the light control layer 27. As the disperse medium 11, the liquid copolymer having no electroconductivity and affinity with the resin matrix 28 is preferably used. In detail, (meth) acrylic acid ester oligomer having a fluoro group and/or a hydroxyl group is preferable and (meth) acrylic acid ester oligomer having a fluoro group and a hydroxyl group is more preferable. When using the copolymer, any one monomer unit of the fluoro group and the hydroxyl group faces the light-control particles 10 and since the remaining monomer unit acts to stably maintain the suspension 9 in the resin matrix 28, the light-control particles 10 are very homogenously dispersed in the suspension 9 and the light-control particles 10 are derived into the phase-separated suspension 9 at the time of phase separation.

A method for forming the light control layer 27 will be described. First, the suspension 9 is mixed with a polymer compound and a mixing solution in which the suspension 9 is dispersed in the polymer compound in a droplet state is prepared. The mixing solution is coated on the electrode of one of the A substrate 4 and the B substrate 5 at a predetermined thickness and the solvent included in the mixing solution is dried and removed if necessary. Thereafter, the two substrates are overlappingly closed to each other so that electrodes on one substrate contact the applied mixing solution.

When being applied, a mixing solution may be diluted with an appropriate solvent, if necessary. When using the solvent, a mixing solution is coated on the A substrate 4 or the B substrate 5 and then dried. As the solvent, tetrahydrofuran, toluene, heptane, cyclohexane, ethyl acetate, ethanol, methanol, acetic acid isoamyl, acetic acid hexyl, and the like, may be used. In order to form the light control film in which the liquid suspension 9 is dispersed in the resin matrix 28 in a fine droplet shape, a method for mixing the light control materials of the present embodiment by a homogenizer, an ultrasonic homogenizer, and the like, and finely dispersing the suspension 9 in the resin matrix 28, a phase-separation method due to polymerization of a silicon resin component in the resin matrix 28, a phase-separation method due to solvent volatilization, or a phase-separation method due to temperature, and the like, may be used.

### (Light Control Device)

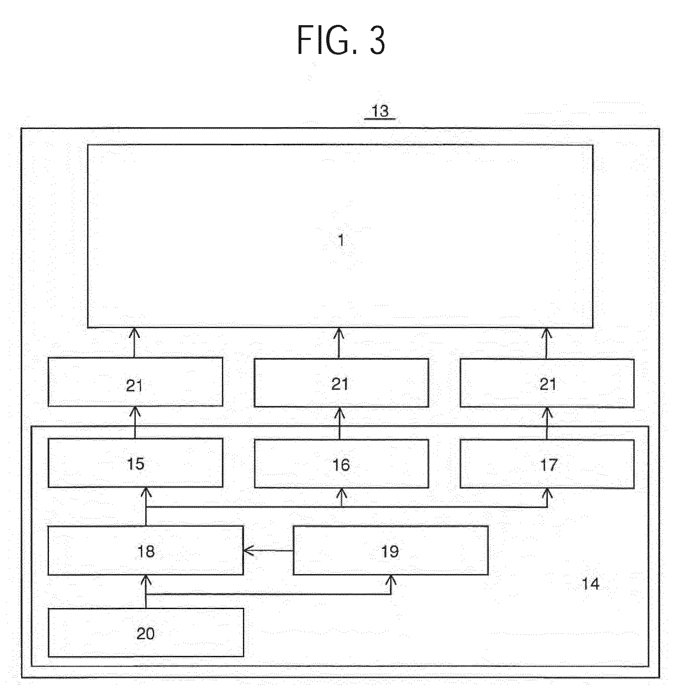

FIG. 3 is a diagram for describing a configuration of a light control device 13 including the SPD 1. The light control device 13 includes the SPD 1 and a drive device 14. The drive device 14 is configured to include an X-electrode output circuit 15 that drives an X electrode 6 of the SPD 1, a Y-electrode output circuit 16 that drives a Y electrode 7, and a Z-electrode output circuit 17 that drives a Z electrode 8, a driving control circuit 18 that controls output circuits thereof, a signal processing circuit 19 that processes an input signal controlling a light control area, a light-control state, and a dispersion state of the light-control particle 10, and a driving power supply 20 that applies voltage to the SPD 1 and each circuit. At an end of the SPD 1, each electrode of the SPD 1 and each electrode output circuit of the drive device 14 are connected to each other via a mutual connection device 21. Examples of an interconnecting connector 21 may include conductive rubber (rubber connector), a flexible printed circuit (FPC), a tape carrier package (TCP), a conductive tape, and the like. The interconnection conductor 21, each electrode, and each electrode output circuit are sandwiched so as to be fixed with a fixture such as resin, clip, and the like, or are connected with each other by bonding a conductive portion with a conductive adhesive such as metal paste, anisotropic conductive paste, an anisotropic conductive film (ACF), and the like.

Further, a low-voltage circuit element configuring each electrode output circuit and other drive devices 14 may be formed on a flexible printed circuit that is the interconnection conductor 21. In addition, the light control device 13 may include an external signal input device that inputs an external environment information signal about incident light, temperature, and the like, to the signal processing circuit 19. Moreover, for example, the light control device 13 may include a fault self-diagnosis device that inputs a fault information signal about configuration fault, and the like, for unexpected accidents, and the like, to the signal processing circuit 19.

The light control device 13 according to the present embodiment may be appropriately used for usages such as indoor and outdoor partitions, a window pane/roof light window for building, various flat panel display devices used for electronic industries and video devices, alternatives of various dashboards and existing liquid crystal display devices, a light shutter, various indoor and outdoor advertisings and guide display panels, a window pane for aircraft/railroad car/ship, a window pane/rearview mirror/sunroof of a car, glasses, a sunglass, a sun visor, an imaging device, and the like. As the applied method, the light control device 13 according to the present embodiment can be directly used, but according to the usage, for example, the light control device 13 according to the present embodiment may be sandwiched between two sheets of bases or may be bonded to one side of the base. As the base, similar to the A substrate 4 and the B substrate 5, for example, glass, a polymer film, and the like, may be used.

### (SPD Driving Method)

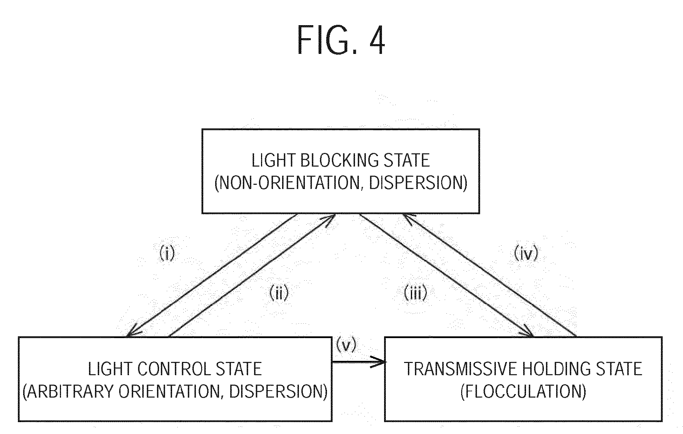

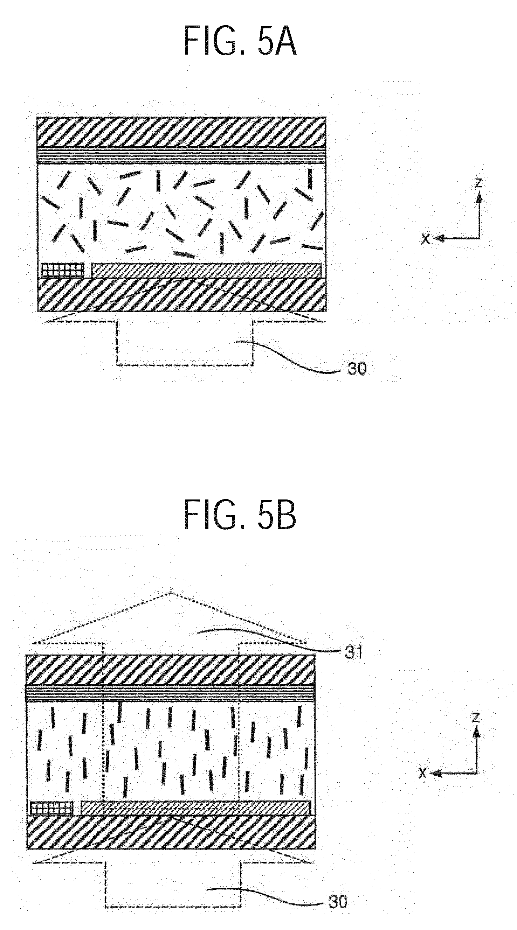

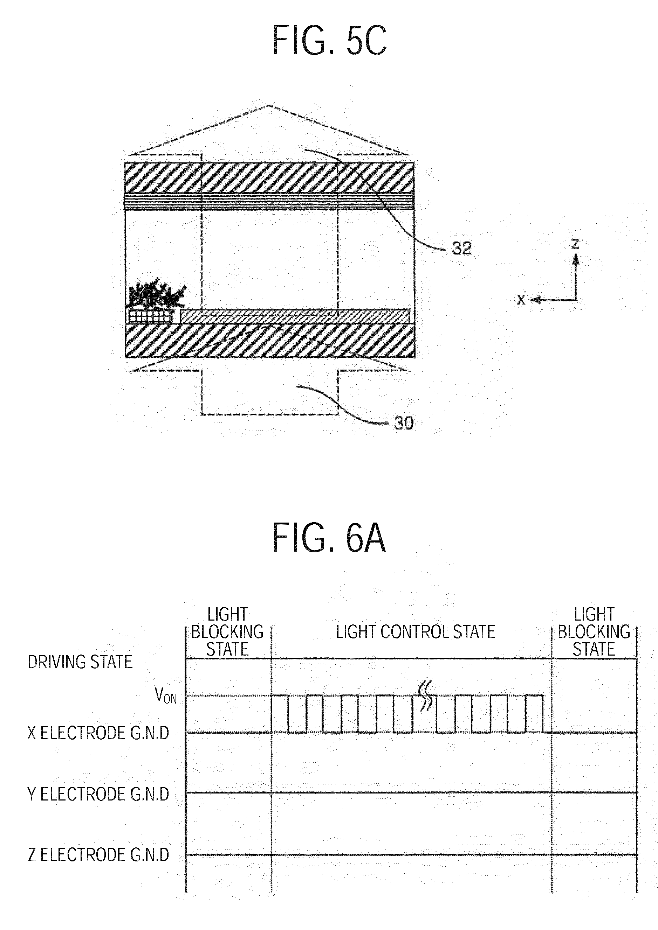

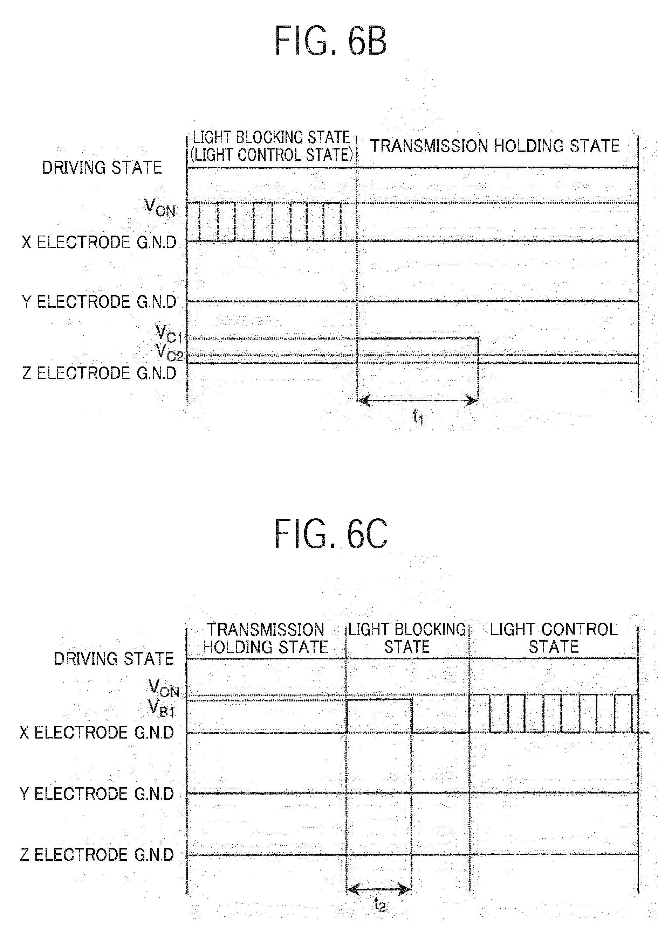

A driving method of the present embodiment will be described below. FIG. 4 is a configuration diagram (flow) of a driving state of a driving method reviewed in the present embodiment. FIG. 5 is a state of the light-control particle 10 in each driving state in a cross section based on an x-z plane similar to FIG. 2 and FIG. 6 is a driving waveform for changing a driving state. According to the flow of FIG. 4, the driving waveform and each driving state according to the present embodiment will be described below.

First, a driving method shows the light-control (transmitted light modulation) state from the light-blocking (transmitted light absorption) state of FIG. 4(i) and the light-blocking state from the light-control state of FIG. 4(ii). FIG. 5A shows the light-blocking state of the SPD 1 and FIG. 5B shows the light-control state of the SPD 1.

The light-control particles 10 are substantially uniformly dispersed within the suspension 9 in the light-blocking state as shown in FIG. 5A, the orientation state of the light-control particle 10 is a disorder state (random) due to Brownian motion, and light incident to the SPD 1 is absorbed and scattered, and thus incident light 30 may not be transmitted but is light-blocked.

FIG. 6A shows the driving waveform performing control from the light-blocking state to the driving state of FIG. 4(i) to the light-control state and from the light-control state to the light-blocking state and from the light-control state of FIG. 4(ii) to the light-blocking state, the SPD 1 in the light-blocking state. In the light-control state from the light-blocking state, an AC voltage signal of a frequency f_{ON} and voltage V_{ON} is applied to the X electrode 6. Further, in the present embodiment, an AC voltage signal waveform is a sine wave but may be an AC waveform that includes a rectangular wave (square wave) or a triangular wave. In addition, the AC waveform having different polarities for each 1/2 period may be simultaneously applied to the X electrode 6, the Y electrode 7, and the Z electrode 8, respectively. The applied voltage to the Y electrode 7 and the Z electrode 8 may be driven with equipotential by simultaneously applying voltage to the X electrode 6, the Y electrode 7, and the Z electrode 8, respectively. Moreover, a circuit element having low voltage endurance may be used by simultaneously applying AC waveforms having different polarities for each 1/2 period to the X electrode 6, the Y electrode 7, and the Z electrode 8, respectively.

The light-control particles 10 are oriented as shown in FIG. 5B according to the applied voltage V_{ON} so as to follow a field direction by a dielectric electrode, and the like, in a state in which the light-control particles 10 are substantially uniformly dispersed within the suspension 9 by the driving waveform. As in the present embodiment, when the incident light 30 and the electric field are equal to the particle orientation direction, the incident light 30 may change the transmitted light quantity of transmitted light 31 from the suspension 9 according to an orientation degree of the light-control particle 10 and modulate the transmittance T of the SPD 1. In the present embodiment, a state in which the transmittance of the SPD 1 is increased becomes an opening state.

The f_{ON} is in a frequency range in which the light-control particles 10 may be uniformly oriented and maintain the orientation state without being aggregated within the disperse medium 11 and is determined by the concentration, permittivity, shape of the light-control particle 10, the affinity with the disperse medium 11, and the like, the viscosity of the disperse medium 11, and the like and is preferably 1000 Hz or less. In addition, the f_{ON} is preferably a critical flicker frequency (CFF) or more, is in a range between 16 Hz and 1000 Hz, and preferably between 50 Hz and 1000 Hz. In addition, the present embodiment makes the f_{ON} and V_{ON} constant, but may modulate the f_{ON} and V_{ON} at the time of starting the light-control state.

In the light-blocking state from the light-control state, the AC voltage signal to the X electrode 6 that is applied at the time of the light-control state stops. In addition, the present embodiment makes the f_{ON} and V_{ON} constant, but may modulate the f_{ON} and V_{ON} at the time of stopping the light-control state.

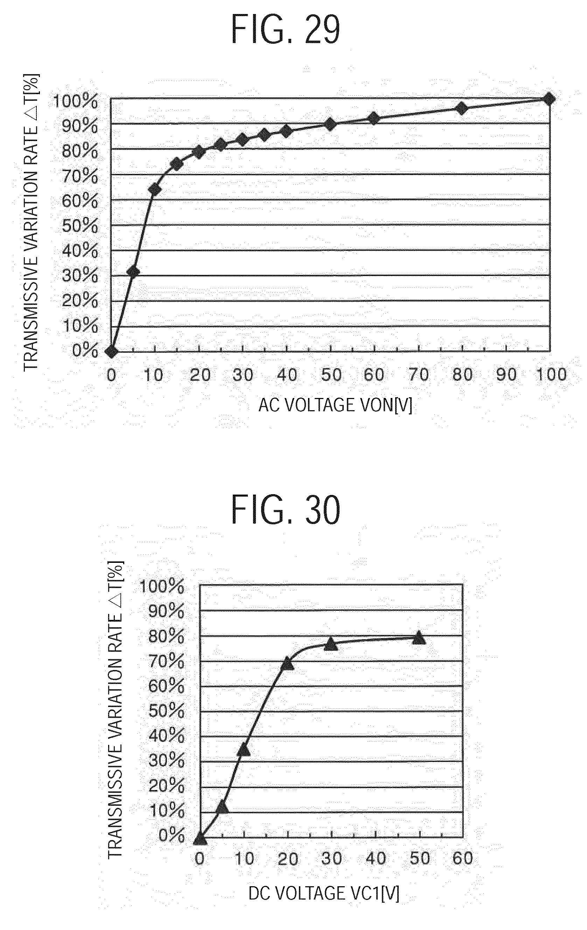

FIG. 29 shows a graph of a transmissive rate of variability ΔT to the change in transmittance of 100 V from AC voltage V_{ON} = 0 V at 50 Hz of the frequency f_{ON}, for the SPD 1 of the present embodiment. As shown in FIG. 29, the transmittance of the SPD 1 according to the present embodiment may increase when the V_{ON} is increased and the SPD 1 may be modulated in the predetermined transmitting and light-blocking state by controlling the V_{ON}.

Next, when the state of the SPD 1 before being driven is the light-blocking state or the light-control state, a driving method from the light-blocking state and the light-control state of FIGS. 4(iii) and (v) to the transmissive-hold state will be described. FIG. 5C shows the transmissive-hold state of the SPD 1.

FIG. 6B shows a driving waveform from the light-blocking state or the light-control state (dotted line) of FIGS. 4(iii) and (v) to the transmissive-hold state. In the present embodiment, DC voltage V_{C1} is applied to the Z electrode 8 and a DC electric field is formed between the X electrode 6 and the Z electrode 8 at the time of driving. The transmissive-hold state is changed from the light-blocking state and the light-control state. In FIG. 6, the AC voltage signal to the X electrode 6 stops and then, the DC voltage V_{C1} is applied to the Z electrode 8, but the AC voltage to the X electrode 6 and the DC voltage to the Z electrode 8 may overlap with each other. Further, in the present embodiment, the DC voltage is applied between the X electrode 6 and the Z electrode 8 to form the DC electric field, but the predetermined AC voltage may be applied to the X electrode 6, the Y electrode 7, and the Z electrode 8 so that the Z electrode 8 has potential higher than other electrodes. The light-control particles 10 according to the present embodiment are charged with the negative charge, and thus, as shown in FIG. 5C, when the Z electrode 8 has high potential with respect to the X electrode 6 and the Y electrode 7, the light-control particles 10 that are substantially uniformly dispersed within the suspension 9 at the time of the light-blocking state and the light-control state are aggregated in the Z electrode 8 or are biased to the Z electrode 8 side. The aggregation and biasing states to the Z electrode 8 are controlled by applied time tₗ of V_{c}. The tₗ is controlled with respect to the V_{c}, the structure of the SPD 1, the concentration, permittivity, and shape of the light-control particle 10, the affinity with the disperse medium 11, the viscosity of the disperse medium 11, and the like. Therefore, the incident light 30 at the cross portion of the X electrode 6 and the Y electrode 7 may be transmitted by the light-control particles 10 without being absorbed or scattered, thereby obtaining the high transmissive light quantity.

It is possible to maintain the aggregation state by the interaction that is specific electrostatic (interaction force, and the like) and electrostatic (image force, electrical double layer, and the like) between the light-control particles 10 and the Z electrode 8 according to the present embodiment. Therefore, there is no need to continuously apply the V_{C1} and the V_{C2}. In addition, when it is insufficient for the interaction between the light-control particles 10 and the Z electrode 8 to maintain the aggregation state, an electrification control agent may be added to the suspension 9 of the SPD 1. As the electrification control agent, it is preferable not to cause the decomposition or coloring of the disperse medium 11, the light-control particles 10, the electrode, and the like, due to the addition of the suspension 9 and examples there of may include metal salt of fatty acid such as stearic acid, lauric acid, ricinoleic acid, octylic acid of metallic soap, and the like.

FIG. 30 shows a graph of the transmissive rate of variability ΔT to a change in transmittance when 50V from the DC voltage V_{C1} is applied to the Z electrode 8, based on the change in transmittance of 100 V from the AC voltage V_{ON} = 0 V in the frequency f_{ON} of 50 Hz in FIG. 29, with respect to the SPD 1 of the present embodiment. As shown in FIG. 30, in the SPD 1 according to the present embodiment, the transmissive light quantity increases to increase transmittance due to the aggregation and biasing to the Z electrode of the light-control particle 10 when the V_{C1} is increased, and about 80% of the change in maximum transmittance in the light-control state may be obtained at V_{C1} = 50 V and the high transmissive light quantity. In addition, it is possible to realize the transmissive-hold state due to the predetermined transmissive light quantity by controlling the V_{C1}.

However, when it is insufficient in spite of the addition of the charge control agent, the predetermined DC voltage V_{C2} may be applied to the Z electrode 8 as shown in a dotted line of FIG. 6B so that the Z electrode 8 has potential higher than those of the X electrode 6 and the Y electrode 7. Even when the charge control agent is not added, the DC voltage V_{c2} may be applied to the Z electrode 8. In addition, the DC voltage V_{C1} to the Z electrode 8 is voltage that can maintain the aggregation and scattering, which are in a relationship of V_{C2} < V_{C1}.

Next, a method for driving the light-blocking state from the transmissive-hold state of FIG. 4(iv) will be described as the transmissive-hold state of the SPD 1 before being driven. FIG. 6C is a driving waveform of the light-blocking state from the transmissive-hold state of FIG. 4(iv).

In the present embodiment, the DC voltage V_{B1} is applied to the X electrode 6 at the time of driving the light-blocking state and the light-control state from the transmissive state. In particular, the DC electric field in which the X electrode 6 has high potential for the Y electrode 7 and the Z electrode 8 is formed between the X electrode 6 and the Z electrode 8. Further, in the present embodiment, the DC voltage is applied to only the X electrode 6 to form the DC electric field, but the predetermined DC voltage may be applied to the X electrode 6, the Y electrode 7, and the Z electrode 8 so that the Z electrode 8 has potential lower than other electrodes. The light-control particles 10 according to the present embodiment are charged with the negative charges and the X electrode 6 has potential higher than the Z electrode 8, and therefore the light-control particles 10 aggregated in the Z electrode 8 move toward the X electrode 6 at the time of the transmissive-hold state. The electric field between the Z electrode 8 and the X electrode 6 is expanded from the Z electrode 8 to the X electrode 6 since the width of the Z electrode 8 is narrow and the disperse medium 11 of the suspension 9 has a material of high resistivity. Therefore, the light-control particles 10 move and are dispersed so as to be diffused in the suspension space, and therefore it is possible to obtain the substantially uniform dispersion state of the light-control particle 10 in the suspension space. Application of V_{B1} to the X electrode 6 stops after the time t₂ when the light-control particles 10 are substantially uniformly dispersed in the suspension 9. In addition, the change in the state from the aggregation of the light-control particles 10 to the dispersion is controlled by the V_{B1} and the t₂, wherein the V_{B1} depends on the structure of the SPD 1, the concentration, permittivity, shape, and charged state of the light-control particle 10, the affinity with the disperse medium 11 and other light-control particles 10, the viscosity of the disperse medium 11, and the like.

Further, when the driving state becomes set to be the light-control state, similarly to FIG. 6A, the frequency f_{ON} and the voltage V_{ON} AC voltage signal are applied to the X electrode 6.

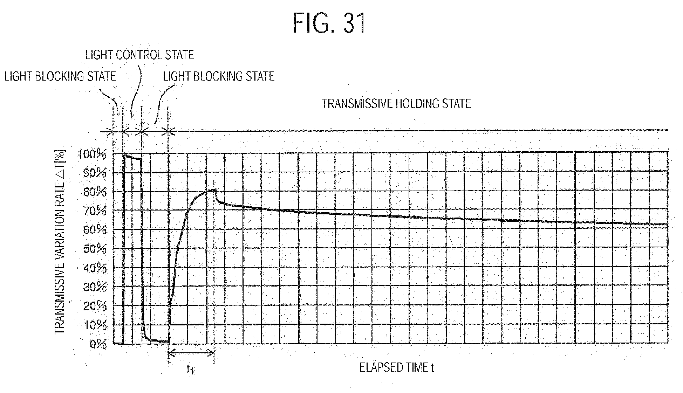

FIG. 31 is a graph showing the transmissive rate of variability ΔT to the change in transmittance when being driven in the light-blocking state, the light-control state, and the transmissive hold state using the driving waveform of FIG. 6A to 6C, based on the change in transmittance of 100 V from AC voltage V_{ON} = 0 V, with respect to the SPD 1 of the present embodiment. The t₁ in FIG. 31 is time when the voltage V_{c} is applied to the Z electrode 8 so as to be established into the transmissive-hold state.

From the above description, it is possible to obtain the uniform light-blocking state, light-control state, and transmissive state within the optical operating area of the SPD 1 by the SPD structure and the driving method of the present embodiment and drive such as the conversion and holding to and in each state.

### [Second Embodiment]

The configuration and structure of the SPD 1 of the present embodiment are basically the same as those of the first embodiment. The present embodiment is different from the first embodiment in that the light control device has an auxiliary power 22 and the driving waveforms are different in the transmissive-hold state. Further, when other configurations, structures, and the like are the same as the first embodiment, the description thereof will be omitted.

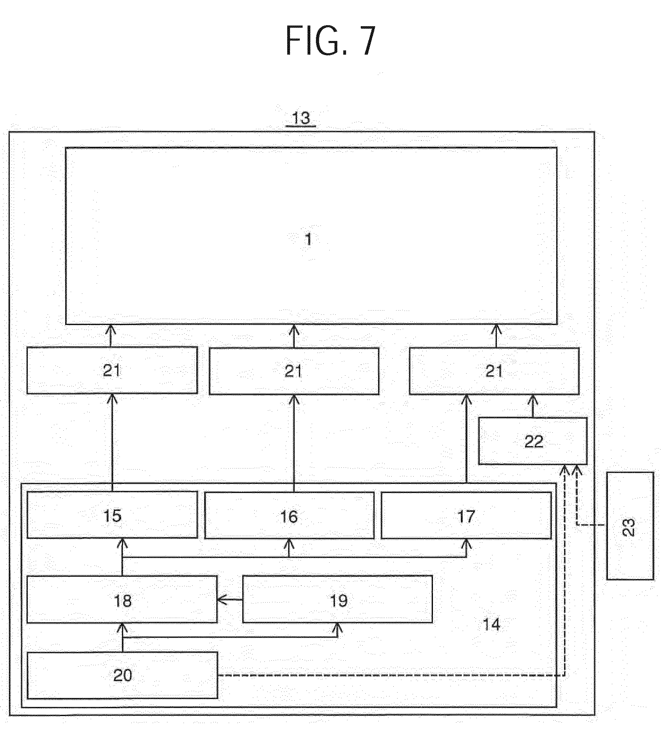

FIG. 7 is a diagram for describing a configuration of the light control device 13 of the present embodiment. Similarly to the first embodiment, the SPD 1 is connected to the drive device 14 via the interconnecting conductor 21 and the interconnecting conductor 21 connecting the Z electrode 8 is also connected to the auxiliary power 22. The auxiliary power 22 includes a DC power source (not shown) including a battery, a charge-discharge device (not shown) of a battery and an output circuit (not shown) of a driving waveform to the Z electrode 8 and the interconnection conductor 21. The auxiliary power 22 is fed by an external power supply 23 or a driving power supply 20 of the drive device 14 in a wired line or wireless line and the battery of the DC power source is charged.

A battery of the DC power source is a storage battery. The storage battery of the present embodiment is a lithium-ion rechargeable battery. Further, the storage battery may be a nickel-metal hydride battery or a lead-acid battery. In addition, an energy harvesting device such as a capacitor, a photovoltaic cell, and the like, may be used as a DC power source instead of a storage battery.

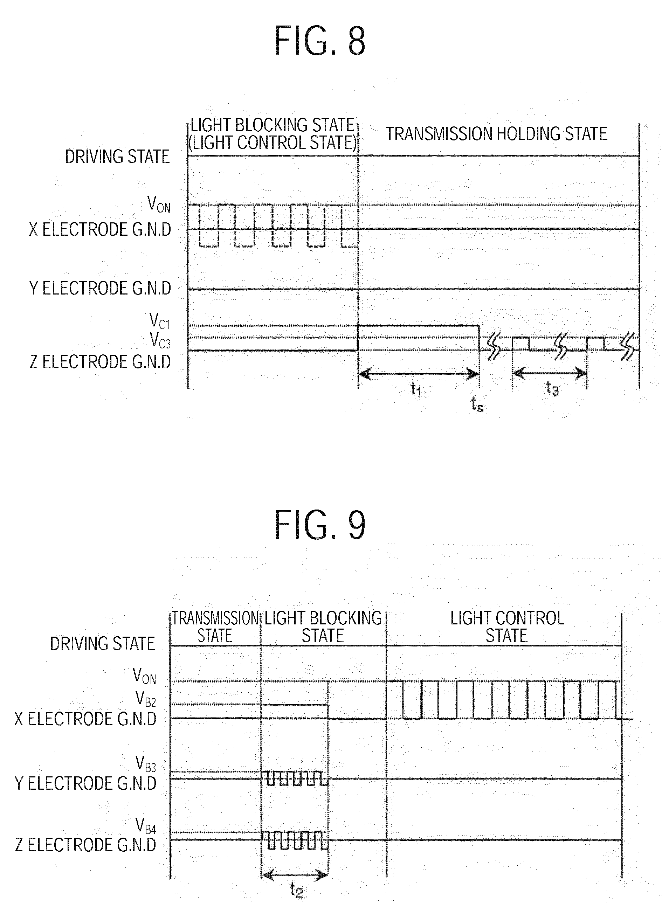

The driving waveform is output to the Z electrode 8 for controlling the transmissive-hold state from the auxiliary power 22. FIG. 8 shows a driving waveform in the transmissive-hold state in the present embodiment corresponding to FIG. 6B in the first embodiment. In order for the light-control particles 10 in the transmissive-hold state to maintain the aggregation to the Z electrode 8 and the biasing to the Z electrode 8, DC voltage V_{C3} is applied to the Z electrode 8 from the auxiliary power 22 at an interval of time t₃ after tₛ shown in FIG. 8 without consecutively applying V_{c2} as shown in FIG. 6B. Further, in the present embodiment, the time t₃ and the V_{C3} are set to be at a constant interval, but may be modulated according to the operation of the dispersion state from the aggregation and biasing state of the light-control particle 10. In addition, the DC voltage V_{C3} to the Z electrode 8 is voltage that can maintain the aggregation and biasing, which is in a relationship of V_{C3} < V_{C1}.

From the above description, it is possible to maintain the aggregation and biasing state of the light-control particle 10 and achieve the driving of the transmissive-hold state at low power consumption rather than continuously applying the V_{C2} to the Z electrode 8 as in the first embodiment, by using the light control device and the driving method of the present embodiment. Further, the present embodiment uses a storage battery, and thus the driving waveform may be applied to the SPD 1 and the Z electrode 8 from the auxiliary power 22 even in the state in which electricity is not fed from the external power supply 23 such as a commercial power supply, and the like. Therefore, when the SPD 1 is used for a mobile body or even at the time of power failure, it is possible to maintain the driving of the transmissive-hold state.

In addition, even when the light-control particles 10 may be aggregated in and held to the Z electrode 8 in the transmissive-hold state, the light-control particles 10 may be aggregated again by the driving waveform of the present exemplary embodiment when the light-control particles 10 aggregated to the Z electrode 8 are dispersed by environment change such as impact, temperature, and the like. Therefore, it is possible to hold the transmissive-hold state.

### [Third Embodiment]

The configuration and structure of the SPD 1 of the present embodiment are basically the same as those of the first embodiment. The present embodiment is different from the first embodiment in light of the driving method for changing the transmissive-hold state to the light-blocking state and the light-control state. In addition, when other configurations and structures of SPD are the same as those of the first and second embodiments, the description thereof will be omitted.

FIG. 9 shows the driving waveform in the present embodiment for changing the transmissive-hold state to the light-blocking state and the light-control state. In the present embodiment, in order to disperse the light-control particle 10 that is aggregated on the Z electrode 8 and is biased to the Z electrode 8 side, AC voltage V_{B4} is applied to the Z electrode 8 without applying the DC voltage V_{B1} to the X electrode 6 of FIG. 6C in the first embodiment.

By the driving waveform of the present embodiment, the light-control particles 10 that are aggregated and biased to the Z electrode 8 move in the disperse medium 11 by AC voltage and the light-control particles 10 are orientation-operated by AC voltage, and therefore may be more de-aggregated and dispersed in the dispersion 9 than the first embodiment. Further, in the cross section view of the x-z plane of the SPD 1, in order to be uniformly dispersed for the Z electrode 8 of the X electrode 6, and due to the reduction in the action of the Y electrode 7 for AC voltage, the AC voltage V_{B2} may be applied to the X electrode 6 and the AC voltage V_{B1} may be applied to the Y electrode 7 similarly to the Z electrode 8.

### [Fourth Embodiment]

The configuration and composition material of the A plate 2 of the SPD 1 of the present embodiment are basically the same as the configuration of the SPD 1 described in the first embodiment. The present embodiment is different from the first embodiment in view of the installation place of the Y electrode 7 and the Z electrode 8 and the structure of the B plate 3. Further, when other configurations and structures, and the like are the same as the first embodiment, the description thereof will be omitted.

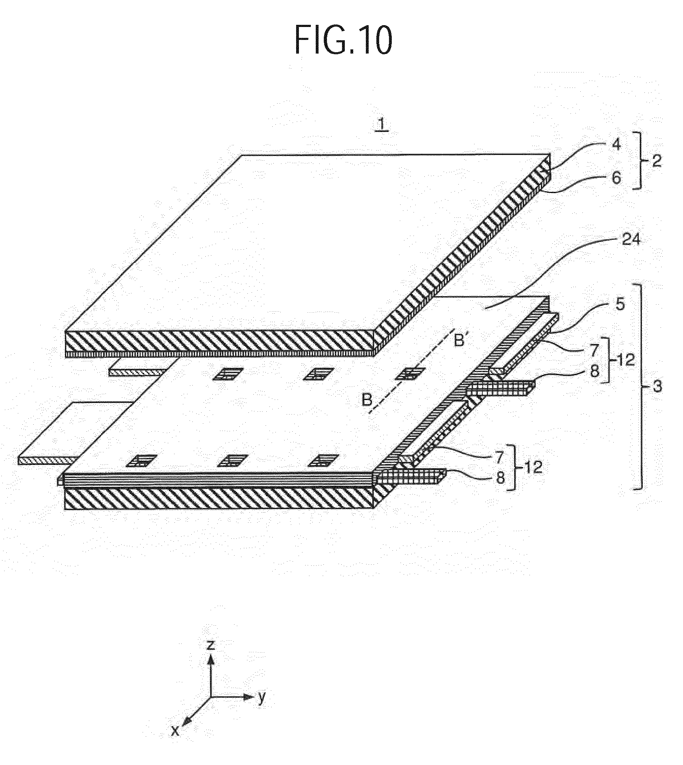

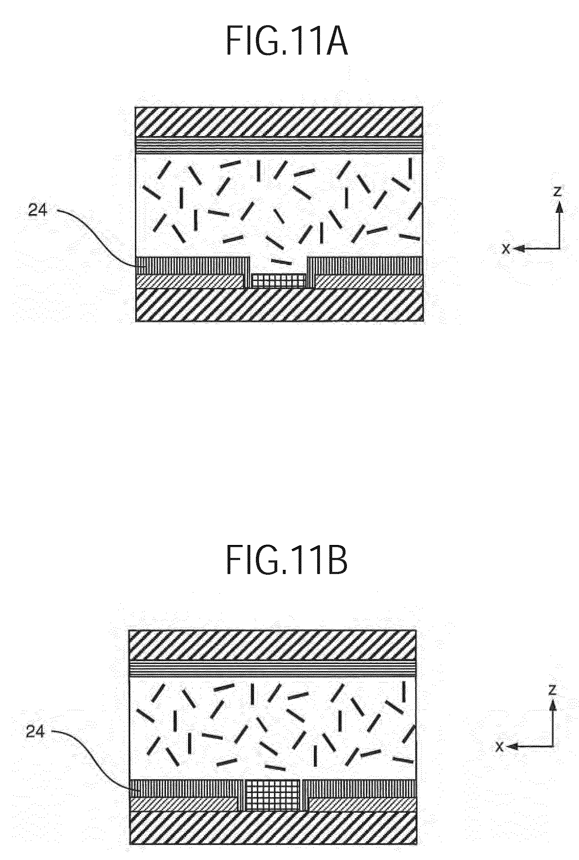

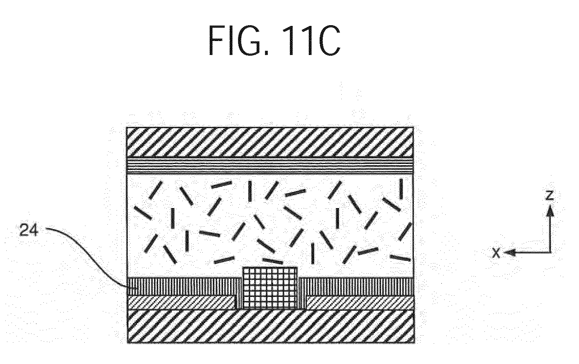

FIG. 10 is a schematic diagram of a cross section structure of the SPD 1 reviewed by the present inventors. FIG. 11A is a cross section view of the SPD 1 taken along line BB' shown in FIG. 10 after the SPD 1 is assembled, based on an x-z plane. The configuration and the forming method of the B plate 3 will be described below. In the B plate 3, the Y electrode 7 and the Z electrode 8 having a narrower width in the x-axis direction than the Y electrode 7 are mounted in a stripe shape on the B substrate 5 that is the transparent support base composed of glass. The Y electrode 7 and the Z electrode 8 are covered with an insulative transparent dielectric layer 24 and a hole (apertural area) is formed in the dielectric layer 24 only in the Z electrode 8. Therefore, the Z electrode 8 contacts the suspension 9 in the hole of the dielectric layer 24. In FIG. 11, a width of the hole of the dielectric layer 24 may be less than the width of the Z electrode 8 and may exceed the width of the Z electrode 8. It is possible to suppress the light-control particles 10 from being aggregated in a deep pool of the Z electrode 8 by making the width of the hole of the dielectric layer 24 smaller than the width of the hole of the Z electrode 8.

Examples of the dielectric layer 24 may include the inorganic material or the organic material. Examples of the inorganic material may include a metal oxide thin film such as silicon oxide, aluminum oxide, and the like. Examples of the organic material may include a fluorine or olefin polymer such as polytetrafluoroethylene (PTFE), and the like, a polyester polymer, and the like. The A substrate 4 or the B substrate 5 may be composed of plastic by using the organic material for the dielectric layer 24, thereby implementing flexibility.

Further, the shape of the hole of the dielectric layer 24 on the Z electrode 8 is not limited to a squared shape as shown in FIG. 10 and may be a circular shape or a polygonal shape. In addition, the aggregation of the light-control particles 10 in the transmissive state and the DC electric field from the hole of the dielectric layer 24 and the Z electrode 8 when changing the transmissive state to the light-blocking state are substantially uniform within the optical operating area of the SPD 1 in the surface of the Z electrode 8 contacting the hole of the dielectric layer 24 and the suspension 9, and therefore it is preferable to arrange the hole of the dielectric layer 24 with regularity. Moreover, a cutting line BB' and a height of the Z electrode 8 from the B substrate 5 in the hole of the dielectric layer 24 shown in FIG. 10 may be equal to the dielectric layer 24 as shown in FIG. 11B or higher than the dielectric layer 24 as shown in FIG. 11C. There is no need for an invalid space for insulating between the Y electrode 7 and the Z electrode 8 by making the height of the Z electrode 8 from the B substrate 5 in the hole of the dielectric layer 24 lower than the dielectric layer 24 as shown in FIG. 11A.

The SPD 1 of the present embodiment is aggregated in and biased to the surface of the Z electrode 8 contacting the hole of the dielectric layer 24 having strong field intensity and the suspension 9 in forming the DC electric field in the transmissive state in FIG. 6B. For this reason, it is possible to obtain the transmitted light higher than that of the first embodiment in the transmissive state.

Further, as shown in FIG. 6A, the driving waveform in the light-control state is AC current. Therefore, since the AC field is formed in the disperse medium 11 and the suspension 9 between the X electrode 6 and the dielectric layer 24 on the Y electrode and the Z electrode 8, the light-control particles 10 may be oriented according to the applied voltage V_{ON} so as to follow the field direction.

### [Fifth Embodiment]

The configuration and composition material of the A plate 2 of the SPD 1 of the present embodiment are basically the same as the configuration of the SPD 1 described in the first embodiment. The present embodiment is different from the first and fourth embodiments in view of the installation place of the Y electrode 7 and the Z electrode 8 and the structure of the B plate 3. Further, when other configurations and structures, and the like are the same as the foregoing embodiments, the description thereof will be omitted.

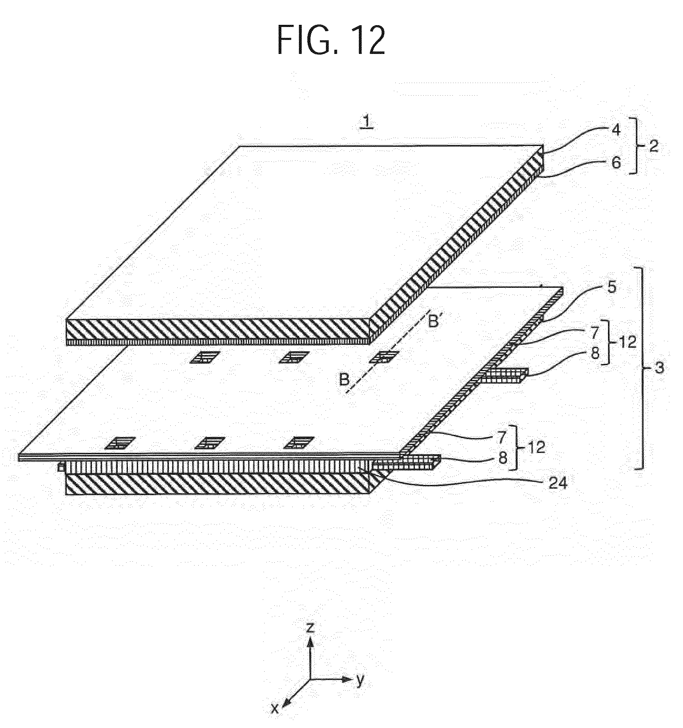

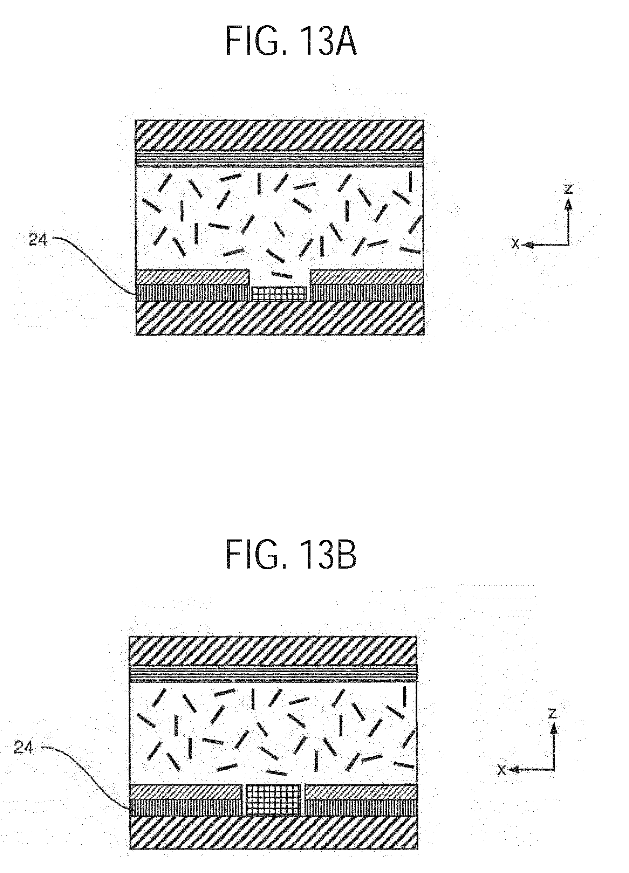

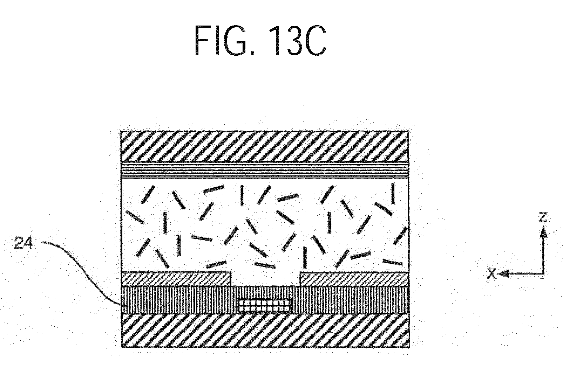

FIG. 12 is a schematic diagram of a cross section structure of the SPD 1 reviewed by the present inventors. FIG. 13A is a cross section view of the SPD 1 taken along line BB' shown in FIG. 12 after the SPD 1 is assembled, based on an x-z plane. The configuration and the forming method of the B plate 3 will be described below. In the B plate 3, the Z electrode 8 having a narrower width in an x-axis direction is mounted in the stripe shape on the B substrate 5 that is the transparent support base composed of glass and the Z electrode 8 is covered with the insulative transparent dielectric layer 24. The Y electrode 7 is formed on the dielectric layer 24, holes are formed in the Y electrode 7 and the dielectric layer 24 only on the Z electrode 8, and the Z electrode 8 contacts the suspension 9 in the Y electrode 7 and the hole of the dielectric layer 24. Further, the shape of the hole of the dielectric layer 24 on the Z electrode 8 is not limited to a squared shape as shown in FIG. 12 and may be a circular shape or a polygonal shape. In addition, it is preferable to arrange the Y electrode 7 and the hole of the dielectric layer 24 with regularity so that the aggregation of the light-control particles 10 in the transmissive state and the DC electric field from the Y electrode 7 and the hole of the dielectric layer 24 and the Z electrode 8 when changing the transmissive state to the light-blocking state are substantially uniform within the optical operating area of the SPD 1 in the surface of the Z electrode 8 contacting the hole of the dielectric layer 24 and the suspension 9. Moreover, a cutting line BB' and a height of the Z electrode 8 from the B substrate 5 in the Y electrode 7 and the hole of the dielectric layer 24 shown in FIG. 12 may be equal to the dielectric layer 24 as shown in FIG. 13B or may be buried in the dielectric layer 24 so as to electrostatically hold the light-control particles 10 in the transmissive-hold state as shown in FIG. 13C.

The Y electrode 7 of the SPD 1 of the present embodiment has a wider area overlapping the X electrode 6 than the first and fourth embodiments, and therefore in the light-control state of FIG. 6A, it is possible to obtain the uniform light-control state within the optical operability of the SPD 1 than the first and fourth embodiments. In addition, at the time of forming the DC electric field in the transmissive state, the electric field from the Z electrode 8 is blocked by the Y electrode 7 beyond the hole of the Y electrode 7, and therefore the light-control particles 10 may be aggregated in and biased to the hole of the Y electrode 7 than the fourth embodiment. For this reason, it is possible to obtain higher transmitted light than that of the fourth embodiment in the transmissive state.

### [Sixth Embodiment]

The configuration and composition material of the A plate 2 of the SPD 1 of the present embodiment are basically the same as those of the SPD 1 described in the first embodiment. The present embodiment is different from the first to fifth embodiments in that ribs 25 in a stripe shape are formed on the B plate 3. Further, when other configurations, structures, and the like are the same as those of the first to fifth embodiments, the description thereof will be omitted.

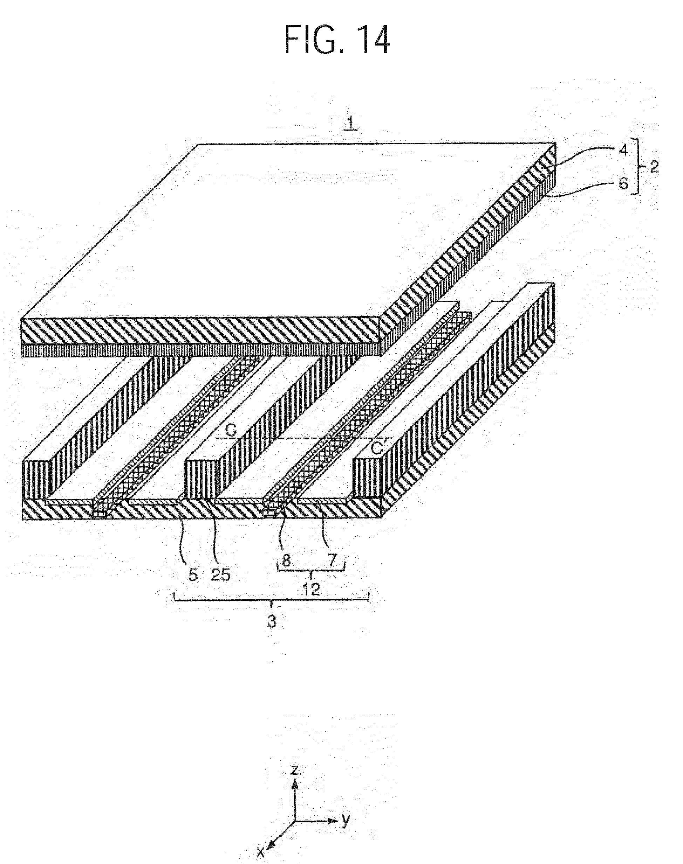

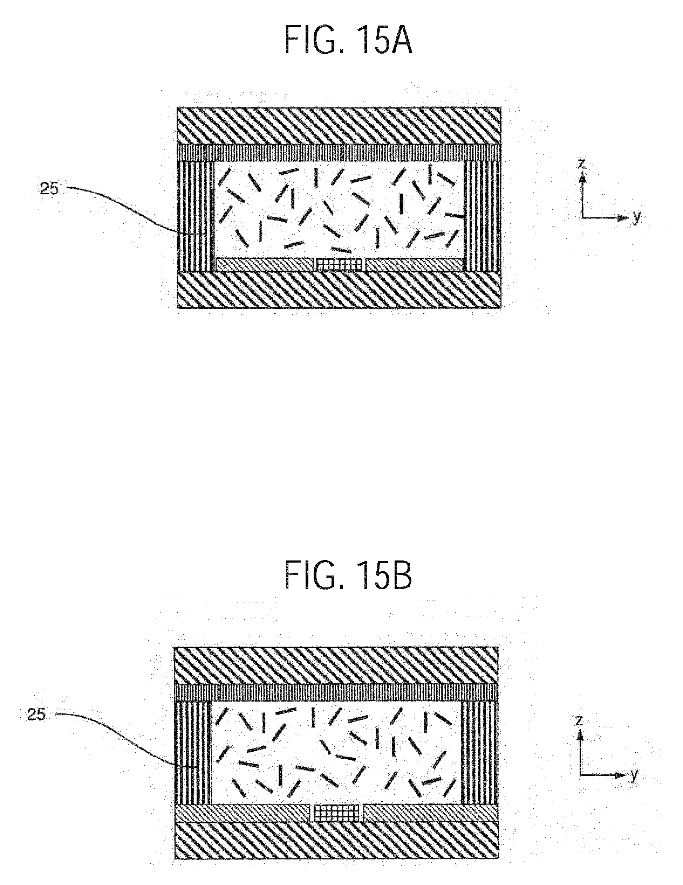

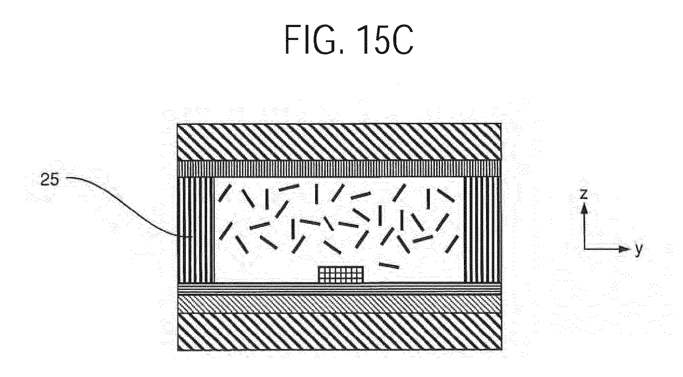

FIG. 14 is a schematic diagram of a cross section structure of the SPD 1 reviewed by the present inventors. FIG. 15A is a cross section view of the SPD 1 taken along line CC' shown in FIG. 14 after the SPD 1 is assembled, based on a y-z plane. In the B plate 3, the Y electrode 7 and the Z electrode 8 having a narrower width in the y-axis direction than the Y electrode 7 are mounted in a stripe shape on the B substrate 5 that is the transparent support base composed of glass. Further, in order to divide the suspension charge space and maintain the distance between the suspension charge space and the A plate 2 and the B plate 3, the ribs 25 having the stripe shape are formed on the B substrate 5 at equal intervals. The Y electrode 7 and the Z electrode 8 are mounted between the ribs 25. The orientation state of the light-control particle is independently controlled for each space partitioned by the plurality of ribs 25. The ribs 25 are composed of the transparent insulative dielectric material composed of glass or a polymer, and are preferably stable against other composition materials and approximates the refractive index of the disperse medium 11, similarly to the spacer beads in the first embodiment. In addition, in order to reduce the transmittance in the light-blocking state, at least top portions of the ribs 25 may be colored in black or may be colored in other colors for chromaticity correction. Further, in order to secure each wide light control operation area, it is preferable to make the width of the rib 25 thin and to make the width of the barrier 25 smaller than those of the two Y electrode 7 and Z electrode 8 mounted between the ribs 25. In addition, the ribs 25 may be formed on the Y electrode 7 as shown in FIG. 15B or the dielectric layer 24 formed to cover the Y electrode 7 as shown in FIG. 15C. Moreover, in the present embodiment, the ribs 25 may be formed in parallel with the Y electrode 7 and the Z electrode 8 but may be formed to be orthogonal to the Y electrode 7 and the Z electrode 8 or obliquely formed or may be formed to have a box shape enclosed in the combination of the parallel and orthogonal form.

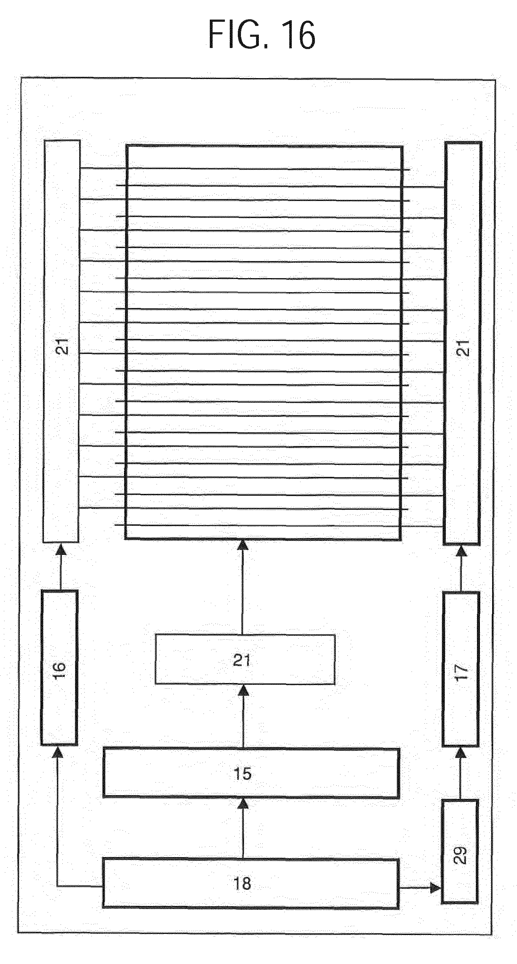

FIG. 16 is a diagram for describing the SPD 1 and a configuration between each electrode and a drive control circuit 18. Each electrode is connected to each electrode output circuit. Further, the Y electrode 7 may have the same electrode structure that is connected to one wiring between the SPD 1 and the Y electrode output circuit 16. When the Z electrode is mounted in plural, a selective circuit 29 selects the Z electrode 8 applying driving voltage between the Z electrode output circuit 17 and the driving control circuit 18. As the interconnecting conductor 21 between the Z electrode 8 and the Z electrode output circuit 17, the flexible printed circuit that can apply the driving voltage to each Z electrode 8 has been used by preventing the adjacent Z electrodes 8 from being connected with each other using a lead terminal corresponding to the number of Z electrodes 8 within the SPD 1.

In the SPD 1 of the present embodiment, it is possible to select the Z electrode 8 applying the DC voltage V_{c} within the SPD 1 by the selective circuit 29 of FIG. 16 and realize different light control operations for each rib 25 within the optical operation area of the SPD 1.

### [Seventh Embodiment]

The configuration and composition material of the A plate 2 of the SPD 1 of the present embodiment are basically the same as those of the SPD 1 described in the first embodiment. The present embodiment is different from the sixth embodiment in that the hole is formed in the dielectric layer 24 on the Z electrode 8, similarly to the fourth embodiment. Further, when other configurations, structures, and the like are the same as those of the foregoing embodiments, the description thereof will be omitted.

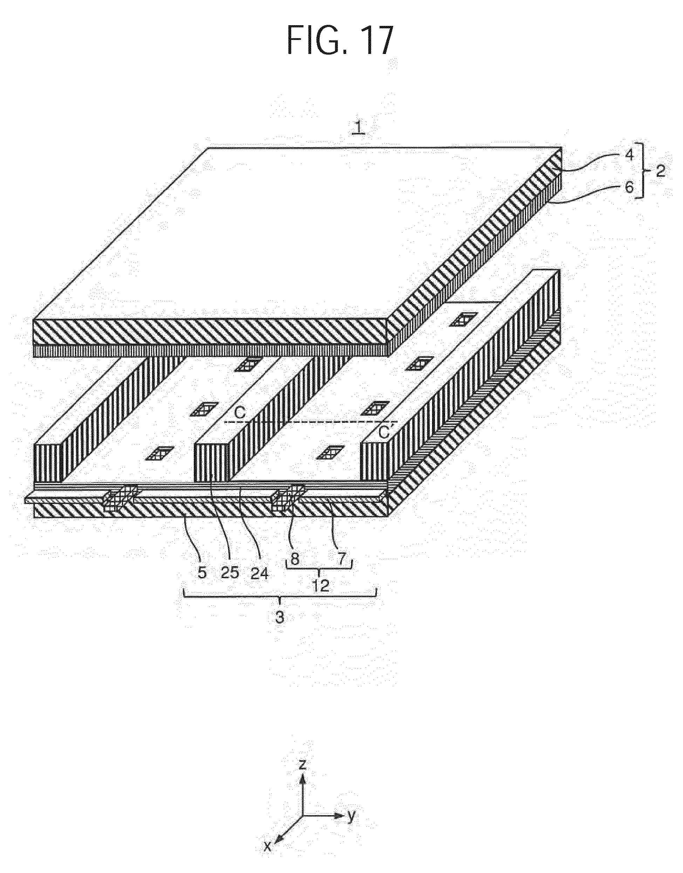

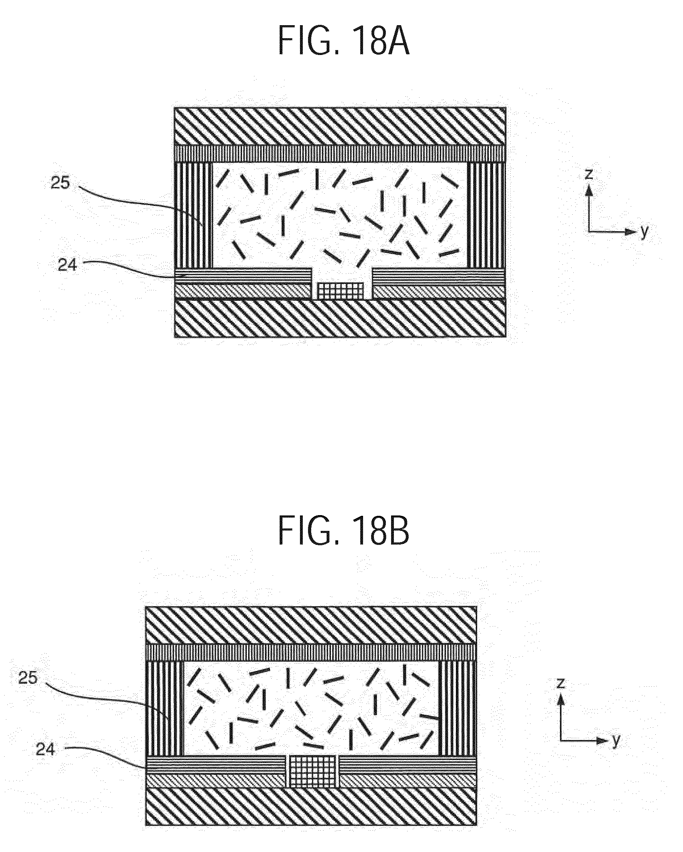

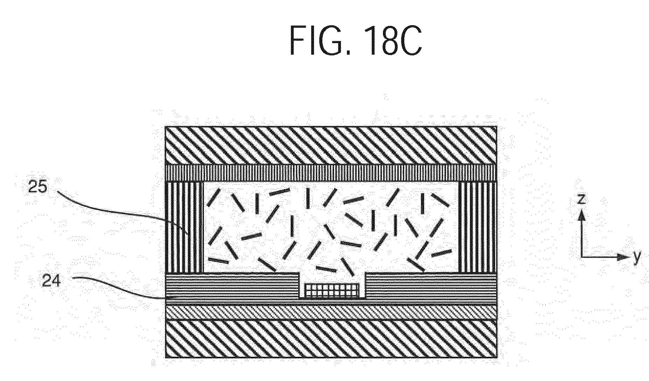

FIG. 17 is a schematic diagram of a cross section structure of the SPD 1 reviewed by the present inventors. FIG. 18A is a cross section view of the SPD 1 taken along line CC' shown in FIG. 17 after the SPD 1 is assembled, based on a y-z plane. The configuration and the forming method of the B plate 3 will be described below. In the B plate 3, the Y electrode 7 and the Z electrode 8 having a narrower width in the y-axis direction than the Y electrode 7 are mounted in a stripe shape on the B substrate 5 that is the transparent support base composed of glass. The Y electrode 7 and the Z electrode 8 are covered with the insulative transparent dielectric layer 24 and the Z electrode 8 is sandwiched on the dielectric layer 24, such that the ribs 25 are formed at equidistance in the stripe shape so as to maintain the suspension charge space. Further, in the present embodiment, the ribs 25 are formed on the dielectric layer 24 but may be formed on the B substrate 5 or the Z electrode 8. Similarly to the fourth embodiment, the hole is formed in the dielectric layer 24 on the Z electrode 8 and the Z electrode 8 contacts the suspension 9 in the hole of the dielectric layer 24. In addition, as shown in FIG. 18C, the present embodiment may have a structure in which the Y electrode 7 is formed on the B substrate 5, the insulative dielectric layer 24 is formed to cover the Y electrode 7, the Z electrode 8 is mounted on the dielectric layer 24 and then covered with the dielectric layer 24 again, and the hole may be generated in the dielectric layer 24 on the Z electrode 8. Moreover, the cutting line CC' shown in FIG. 17 and the height of the Z electrode 8 in the hole of the dielectric layer 24 from the B substrate 5 may be equal to the dielectric layer 24 and higher than the dielectric layer 24 as shown in FIG. 18B.

The SPD 1 of the present embodiment is aggregated in and biased to the surface of the Z electrode 8 contacting the hole of the dielectric layer 24 and suspension 9 having strong field intensity in forming the DC electric field in the transmissive state in FIG. 6B. For this reason, it is possible to obtain higher transmitted light than the sixth embodiment in the transmissive state.

### [Eighth Embodiment]

The configuration and composition material of the A plate 2 of the SPD 1 of the present embodiment are basically the same as those of the SPD 1 described in the first and sixth embodiments. Similarly to the fifth embodiment, the present embodiment is different from the sixth embodiment in that the Y electrode 7 contacts the suspension space and the Y electrode 7 is formed on the Z electrode 8 and the hole is formed in the dielectric layer 24 and the Y electrode 7. Further, when other configurations, structures, and the like are the same as those of the foregoing embodiments, the description thereof will be omitted.

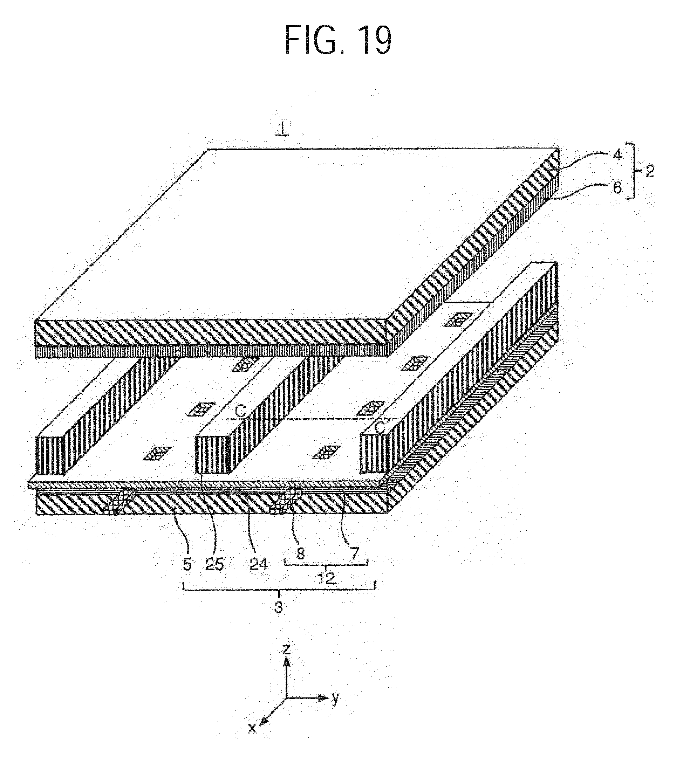

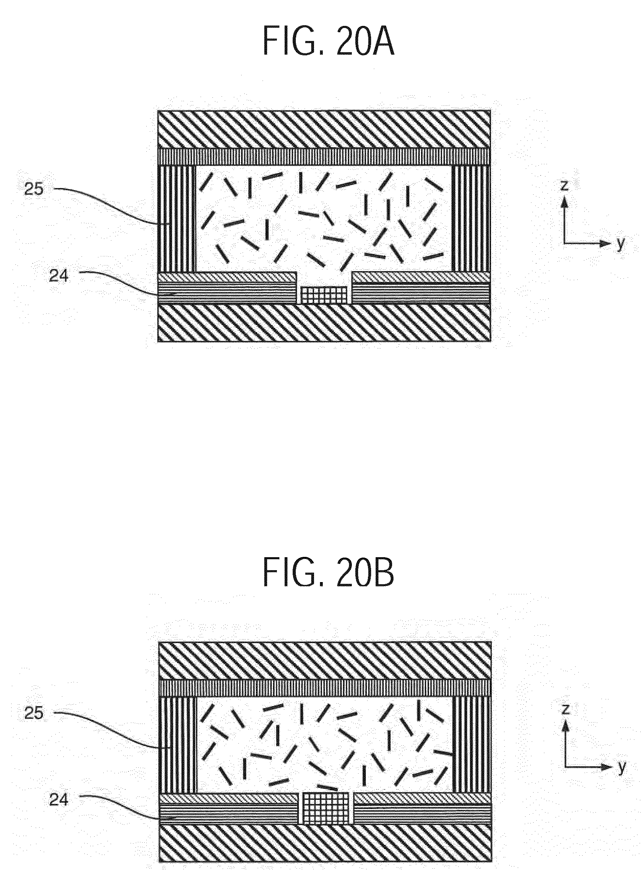

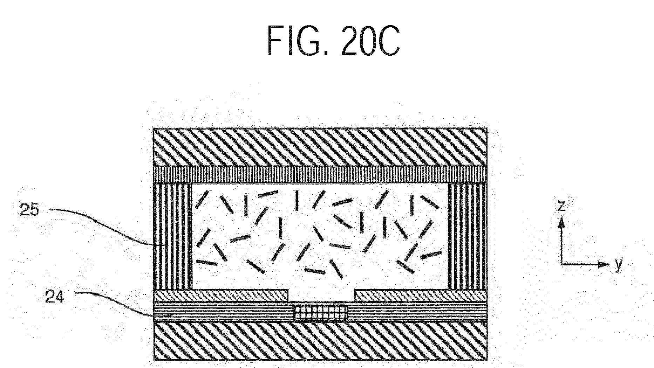

FIG. 19 is a schematic diagram of a cross section structure of the SPD 1 reviewed by the present inventors. FIG. 20C is a cross section view of the SPD 1 taken along line CC' shown in FIG. 19 after the SPD 1 is assembled, based on a y-z plane. The configuration and the forming method of the B plate 3 will be described below. In the B plate 3, the Z electrode 8 having a narrower width in a y-axis direction is mounted in the stripe shape on the B substrate 5 that is the transparent support base composed of glass and the Z electrode 8 is covered with the insulative dielectric layer 24. The Y electrode 7 is formed on the dielectric layer 24, the Y electrode 7 is formed only on the Z electrode 8 and holes are formed in the dielectric layer 24, and the Z electrode 8 contacts the suspension 9 in the Y electrode 7 and the hole of the dielectric layer 24. The Z electrode 8 is sandwiched on the Y electrode 7 such that the ribs 25 are formed in a stripe shape at equal intervals. Further, in the present embodiment, the ribs 25 are formed on the Y electrode 7 but may be formed on the B substrate 5 or the dielectric layer 24. Similarly to the fourth embodiment, the hole is formed in the Y electrode 7 on the Z electrode 8 and the dielectric layer 24, and the Z electrode 8 contacts the suspension 9 in the hole of the dielectric layer 24. In addition, the cutting line CC' shown in FIG. 19 and the height of the Z electrode 8 in the hole of the dielectric layer 24 from the B substrate 5 may be equal to the dielectric layer 24 as shown in FIG. 20B and may be covered with the dielectric layer 24 as shown in FIG. 20C.

The Y electrode 7 of the SPD 1 of the present embodiment has a wider area overlapping the X electrode 6 than in the sixth and seventh embodiments, and therefore, in the light-control state of FIG. 6A, the SPD 1 of the present embodiment may obtain the uniform light-control state within the optical operating area of the SPD 1 than in the sixth and seventh embodiments in the light-control state of FIG. 6A.

### [Ninth Embodiment]

The present embodiment is different from first to the eighth embodiments in view of the Y electrode structure and the driving method of the SPD 1 and the optical characteristics of the transmitted light at the light control state. The SPD structure, the driving method, and the optical characteristics in the light-control state will be described below. Further, when other configurations, structures, driving methods, and the like are the same as those of the foregoing embodiments, the description thereof will be omitted.

### (SPD)

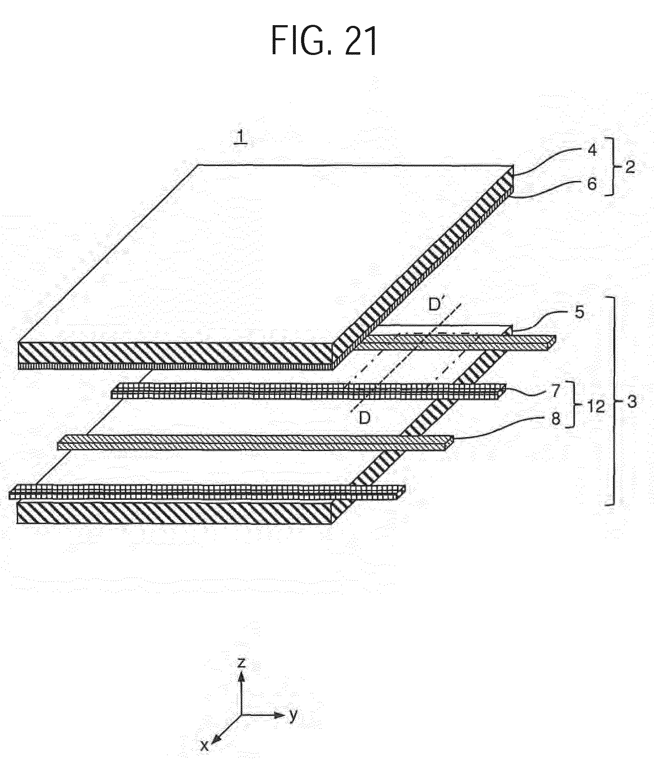

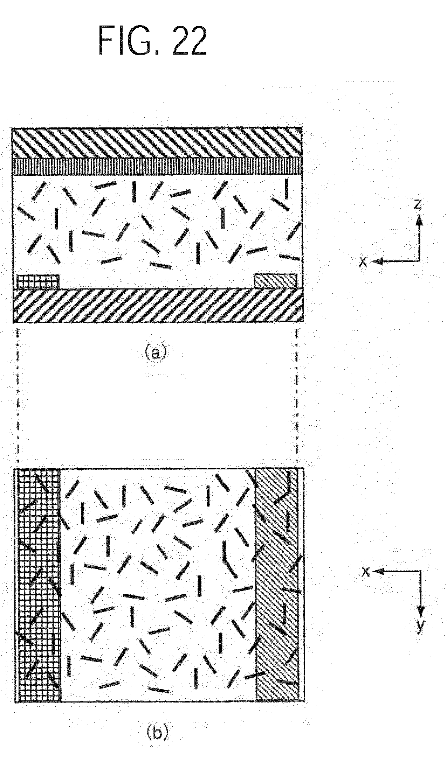

FIG. 21 is a schematic diagram of a cross section structure of the SPD 1 reviewed by the present inventors. FIG. 22A is a cross section view of the SPD 1 taken along line DD' shown in FIG. 21 after the SPD 1 is assembled, based on an x-z plane and FIG. 22B is an x-y plan view at the A plate 2 side of a portion enclosed with a dotted line E shown in FIG. 21.

Next, the configuration and the forming method of the B plate 3 will be described below. In the B plate 3, a YZ electrode pair 12 configured of the Y electrode 7 and the Z electrode 8 composed of indium tin oxide (ITO) is mounted in a stripe shape on the B substrate 5 that is the transparent support base composed of glass. Further, the Y electrode 7 has a narrower width in an x-axis direction than the first embodiment and the width in an x-axis direction of the Y electrode 7 and the Z electrode 8 is in a range between the 10 µm and 100 µm so as to increase the transmittance in the transmissive-hold state, more preferably between 10 µm and 50 µm so as to reduce an area of the field forming unit in the Z-axis direction on the Y electrode 7 and the Z electrode 8 that causes the degradation in the visibility of the Z electrode 8 and is invalid in the light-control state indicated below. The interval in the x-axis direction of the Y electrode 7 and the Z electrode 8 is in a range between 5 µm and 1000 µm and preferably between 10 µm and 1000 µm and is in a range between 5 µm and 1000 µm and preferably between 10 µm and 300 µm so as to suppress the increase in the driving voltage.

Further, in the present embodiment, the Y electrode 7 and the Z electrode 8 are composed of indium tin oxide but may be composed of indium oxide zinc (IZO), tin oxide, and zinc oxide or a transparent conductor such as carbon nano tube, graphene, and the like. In addition, the Y electrode 7 and the Z electrode 8 may be composed of a single layer or a stacked layer made of metals such as chrome, copper, aluminum, silver, and the like, and an alloy thereof or may also be mounted with an ultrafine wire of metals such as copper, a copper alloy, and the like. Moreover, in the present embodiment, the X electrode 6 is formed on a surface of the support base and the Y electrode 7 and the Z electrode 8 are mounted in the stripe shape, but the present embodiment is not limited thereto and may be mounted to meet shapes such as a circle, and the like, or shapes such as character shape, and the like.

### (SPD Driving Method)

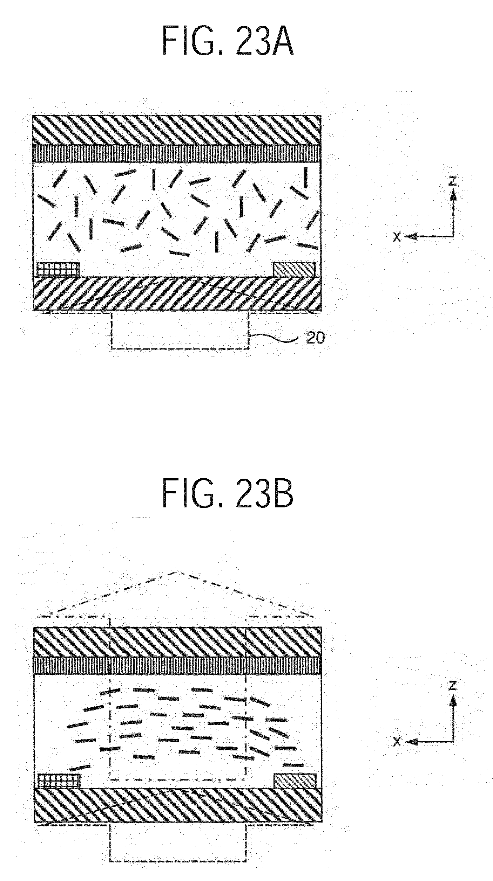

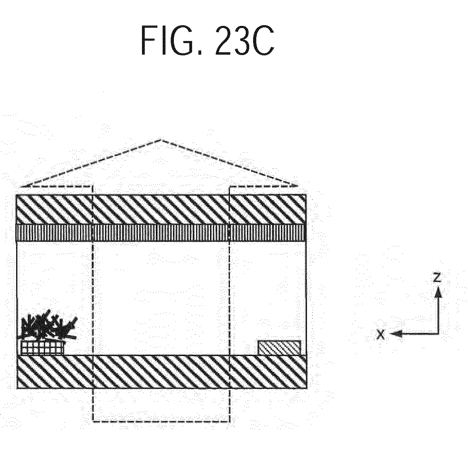

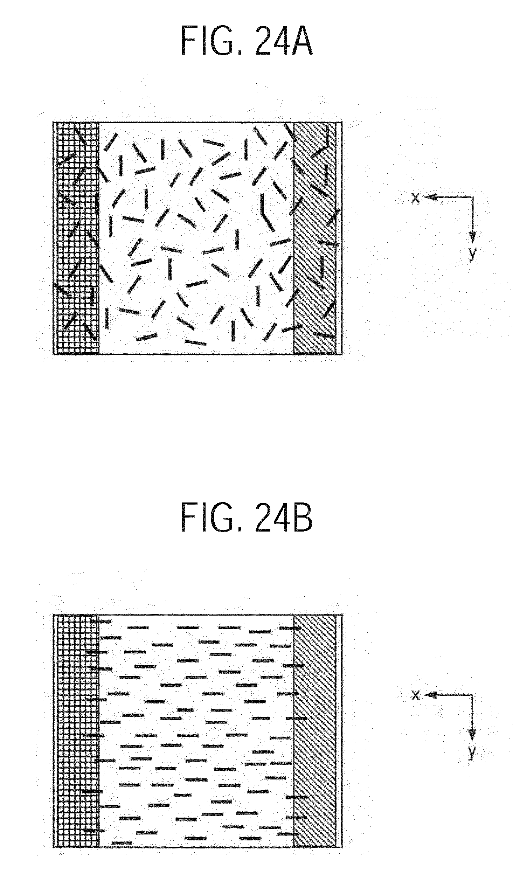

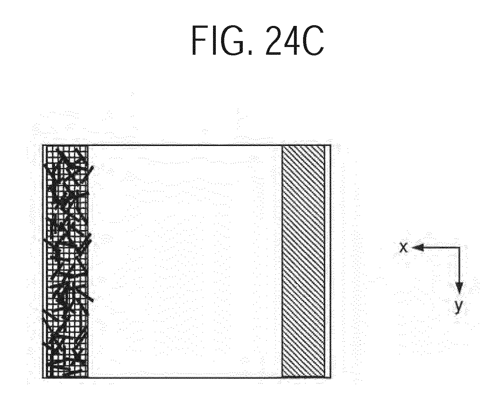

Next, the driving method of the present embodiment will be described below. FIGS. 23A to 23C are states of the light-control particle 10 within the SPD 1 in each driving state, and is a cross section view of the SPD 1 taken along line DD' shown in FIG. 21 after the SPD 1 is assembled, based on an x-z plane vertical to the YZ electrode pair 12. FIG. 23A shows the light-blocking state of the SPD 1, FIG. 23B shows the light-control state of the SPD 1, and FIG. 23C shows the transmissive state of the SPD 1. Meanwhile, FIGS. 24A to 24C are states of the light-control particle 10 within the SPD 1 in each driving state in an x-y plan view viewed from the A plate 2 side of a portion enclosed with a dotted line E shown in FIG. 21, in which FIG. 24A shows the light-blocking state of the SPD 1, FIG. 24B shows the light-control state of the SPD 1, and FIG. 24C shows the transmissive state of the SPD 1. The driving waveform realizing each driving method is the same as those of FIGS. 6, 8 and 9 of the first to third embodiments, except for the light-control state.

Similarly to the first embodiment, the light-control particles 10 are substantially uniformly dispersed within the suspension 9 in the light-blocking state as shown in FIGS. 23A and 24A, the orientation state of the light-control particle 10 is a disorder state (random) due to Brownian motion, and light incident to the SPD 1 is absorbed and scattered and thus, the incident light 20 is light-blocked rather than being transmitted.

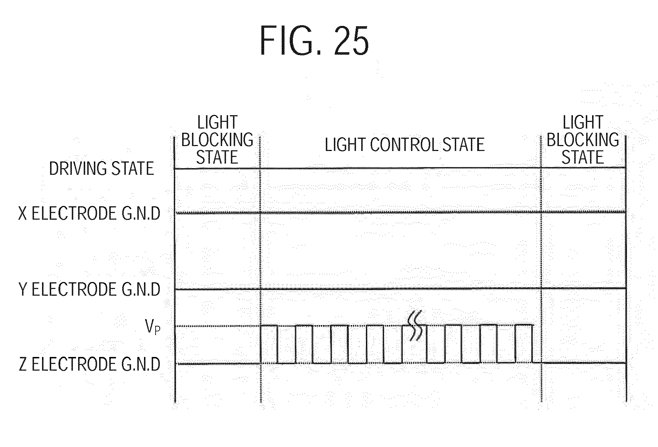

The light-control particles 10 are substantially uniformly dispersed within the suspension 9 in the light-control state as shown in FIGS. 23B and 24B and the light-control particles 10 are substantially oriented in the field direction between the Y electrode 7 and the Z electrode 8 by applying the frequency fₚ and the AC voltage V_{P} sufficient for the orientation operation between the Y electrode 7 and the Z electrode 8. FIG. 25 shows the driving waveform when changing the light-blocking state to the light-control state.

Further, in the present embodiment, the AC voltage signal waveform is a sine wave but may be the AC waveform that includes a rectangular wave (square wave) or a triangular wave. In addition, the AC waveform having different polarities for each 1/2 period may be simultaneously applied to the Z electrode 8 and the Y electrode 7, respectively. Moreover, a circuit element having low voltage endurance may be used by simultaneously applying the AC waveforms having different polarities for each 1/2 period to the Y electrode 7 and the Z electrode 8, respectively. The fₚ is a frequency range in which the light-control particles 10 may be uniformly oriented and maintain the orientation state without being aggregated within the disperse medium 11, is determined by the concentration, permittivity, shape of the light-control particle 10, the affinity with the disperse medium 11, and the like, the viscosity of the disperse medium 11, and the like, and is preferably in a range between 50 Hz and 1000 Hz. In addition, in the present embodiment, fₚ and V_{P} are constant, but fₚ and V_{P} may be modulated at the time of starting the light-control state.

Therefore, when the incident light 20 to the SPD 1 is unpolarized, linearly-polarized light in the orthogonal (parallel with the YZ electrode pair 12) direction to the field direction is emitted from the SPD 1 by the oriented light-control particles 10, in the suspension charge space.

In the transmissive-hold state, since the light-control particles 10 are charged with negative charges as shown in FIGS. 23C and 24C, when the Z electrode 8 has high potential with respect to the X electrode 6 and the Y electrode 7, the light-control particles 10 that are substantially uniformly dispersed within the suspension 9 at the time of the light-blocking driving and the light control driving are aggregated in the Z electrode 8 having a narrow width or is biased around the Z electrode 8. Therefore, the light-control particles 10 are aggregated in and biased to the Z electrode 8, and therefore the incident light to the SPD 1 is emitted without being absorbed and scattered by the light-control particles 10 in an area other than the Z electrode 8 of the suspension 9, thereby obtaining the high transmitted light at the time of the transmissive driving. Further, for the method for aggregation and biasing of the light-control particle 10 in the transmissive-hold state, when the Z electrode 8 becomes high potential as shown in FIGS. 23C and 24C, the light-control particles 10 may not be aggregated and biased to the Z electrode 8, and when the Y electrode becomes high potential, the light-control particles 10 may be aggregated and biased to the Y electrode 7, or when both the Y electrode 7 and the Z electrode 8 become high potential with respect to the X electrode 6, the light-control particles 10 may be aggregated and biased to the Y electrode 7 and the Z electrode 8.

Therefore, it is possible to realize the light control device having a function as a polarizer modulating the incident light into polarized light in the light-control state by using the SPD 1 and the driving method of the present embodiment.

### [Tenth Embodiment]

The light control device according to the present embodiment is different from the ninth embodiment in view of the configuration and structure of the B plate 3 of the SPD 1 and includes a polarizing plate 40 that is a polarizer. Further, when the SPD 1 and the driving method and the drive device 14 are the same as the ninth embodiment, the description thereof will be omitted.

The polarizing plate 40 is disposed on the SPD 1 so that the transmission axis thereof is orthogonal to the YZ electrode pair 12, that is, is parallel with the field direction. The polarizing plate 40 is a polarizing filter in which an iodine complex in polyvinyl alcohol (PVA) is arranged in a 1-axis direction and which is made of TAC and formed in a sheet shape. Further, as the polarizing plate 40, the polarizing filter included in the dichroism pigment polyvinyl alcohol rather than the iodine complex or a liquid crystal device including the drive device 14 rather than the polarizing plate may be used as the polarizing plate 40.

### (SPD)

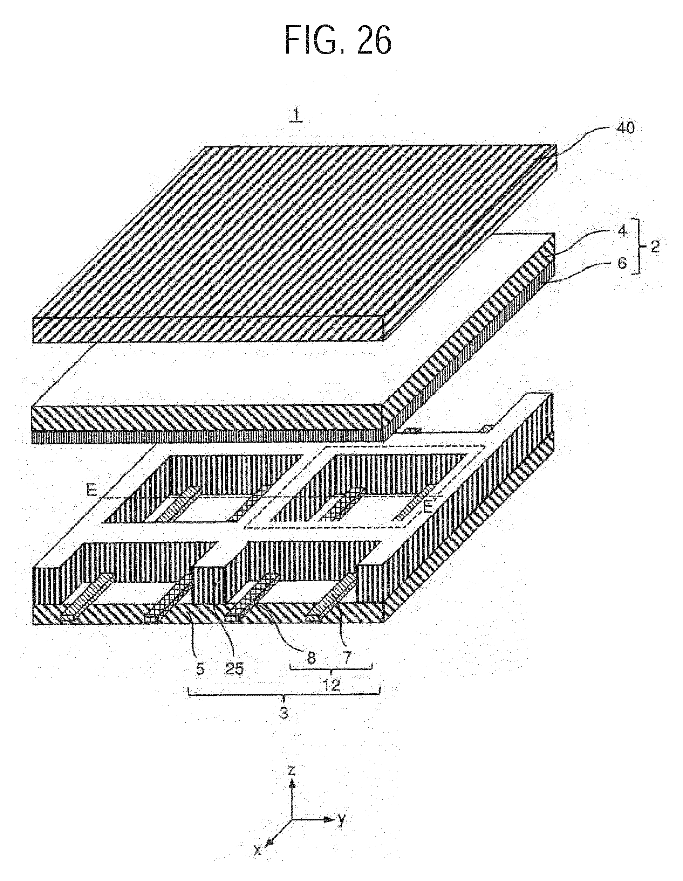

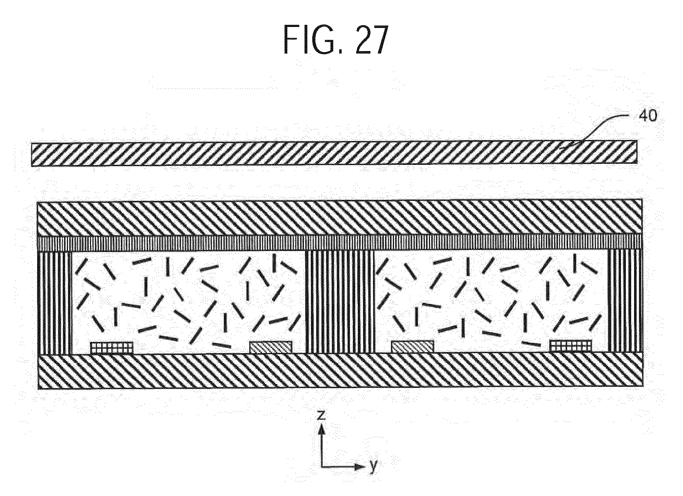

Next, the structure of the SPD 1 of the present embodiment will be described below. FIG. 26 is a schematic diagram of a cross section structure of the SPD 1 reviewed by the present inventors and FIG. 27 is a cross section view of the SPD 1 taken along line EE' shown in FIG. 26 after the SPD 1 is assembled, based on a y-z plane vertical to the YZ electrode pair 12.

Similarly to the seventh embodiment, in the A plate 2, the X electrode 6 of the transparent electrode formed of indium tin oxide (ITO) is formed on one surface of the A substrate 4 that is the transparent support base composed of glass. Further, the X electrode 6 is orthogonal to the YZ electrode pair 12 rather than one surface of the A substrate 4 and may be mounted in the stripe shape so as to be disposed in the light control cell having a box shape of the CL shown in FIG. 26.

In the B plate 3, the YZ electrode pair 12 including the Y electrode 7 and the Z electrode 8 is formed on the B substrate 5 that is the transparent support base composed of glass in the x-axis direction in the stripe shape, and the Y electrode 7 and the Z electrode 8 are arranged in order of the same electrode as the electrode of the adjacent electrode pair. The ribs 25 having a squared box shape so as to enclose the YZ electrode pair 12 are formed on the B substrate 5. Further, the installation structure of the YZ electrode pair 12 using the area enclosed with the ribs 25 as the light control cell may be formed in a geometry shape such as honeycomb-shaped polygon, a circle, and the like, a shape of a character, and the like, in addition to a square shape, so as to correspond to the polarized light region of the polarizer 40 or the interval of the electrode pair.

Such an arrangement order and a rib structure of the YZ electrode pair 12 can obtain an effect of preventing cross-talk of an electric field with the adjacent electrode pair and the light control cell due to DC voltage and AC voltage, in addition to the division of the suspension charge space and the holding of the distance between the suspension charge space and the A plate 2 and the B plate 3 at each YZ electrode pair 12. The ribs 25 are the insulative dielectric material made of glass or a polymer and are colored in a predetermined color. In the present embodiment, the ribs 25 are colored in black.

### (Light Control Device)

The driving circuit of the present embodiment has the same configuration as FIG. 16 of the sixth embodiment, has a selective circuit 29 that selects the light control cell and the Z electrode 8 applying the driving voltage between the Z electrode output circuit 17 and the driving control circuit 18, and uses the flexible printed circuit of the sixth embodiment as the interconnecting conductor 21 between the Z electrode 8 and the Z electrode output circuit 17. In addition, when the X electrode 6 is not formed on one surface of the A substrate 4 but is divided so as to be positioned within the light control cell, similarly to the Z electrode 8, the X electrode 6 may use a flexible printed circuit which may have lead terminals of the same number as the number of X electrodes 6 as the interconnecting conductor 21 between the X electrode 6 and the X electrode output circuit 15, prevent the connection between the adjacent X electrodes 6, and apply the driving voltage to each X electrode 6.

### (SPD Driving Method)

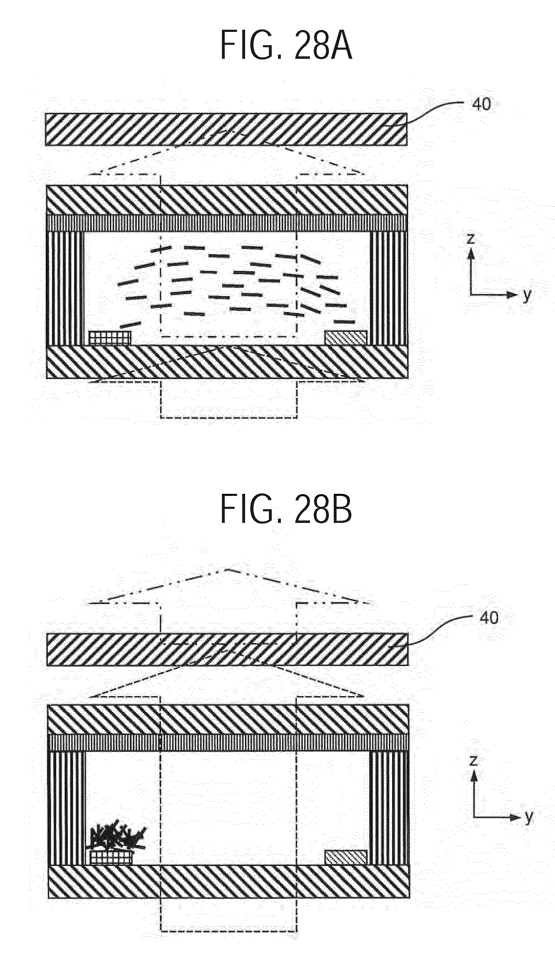

FIGS. 28A and 28B are diagrams showing the modulated shape of the light-control particle operation and the incident light of the SPD 1 by the driving method in the present embodiment. FIG. 28A shows the high light-blocking state in the light control device and FIG. 28B shows the polarized light state.

In the light-blocking state of the first to ninth embodiments in which the light-control particles 10 are randomly arranged, the incident light 30 may be slightly leaked. With the occurrence of this phenomenon, when the adjacent light control cells and the driving state are different from each other, sufficient contrast may not be obtained.

Similarly to the ninth embodiment, the driving waveform of FIG. 25 is applied to each electrode of the SPD 1 in the high light-blocking state. Therefore, the light-control particle 10 is oriented in the field direction between the Y electrode 7 and the Z electrode 8 as shown in FIG. 28A. In this state, when the incident light 30 to the SPD 1 is unpolarized, the linearly-polarized light in the orthogonal (parallel with the YZ electrode pair 12) direction to the field direction is emitted from the SPD 1 by the oriented light-control particles 10, in the suspension charge space. The transmission axis of the polarizing plate 40 on the SPD 1 is parallel with the field direction (vertical to the YZ electrode pair 12).

Therefore, the linearly-polarized light 33 emitted from the SPD 1 is absorbed into the polarizing plate 40 on the SPD 1, and therefore as in the present embodiment, the high light-blocking state is obtained when using the polarizing plate 40.

In the polarized light state, the light-control particle 10 is aggregated and biased to the Z electrode 8 as shown in FIG. 28B by applying the driving waveform in the transmissive-hold state in the first to ninth embodiments to each electrode. When unpolarized light is incident to the SPD 1, the unpolarized light is not absorbed and scattered in the area other than the Z electrode 8 of the suspension 9 by the light-control particle 10, and therefore the SPD 1 has high transmittance for the incident light and the polarized light characteristics of the emitted light are substantially in a state before being incident. Therefore, the unpolarized light is incident to the polarizing plate on the SPD 1 and the linearly-polarized light may be emitted in the direction in parallel (vertical to the YZ electrode pair 12) with the field direction from the polarizing plate.

Therefore, the light control device including the SPD 1 and the polarizing plate 40 of the present embodiment may generate a large transmittance difference between the high light-blocking state and the polarized light state for the light control cell and may realize the light control cell control of the high contrast.

In FIG. 28, the polarizing plate 40 is disposed on the A substrate 4 of the SPD 1. However, it is possible to obtain the same effect even though the polarizing plate 40 is attached to the lower portion of the A substrate 4. Further, the present embodiment is not limited to the case in which the polarizing plate 40 is attached to the substrate. For example, the polarizing plate 40 may be attached to the incident light source that generates the linearly-polarized light spaced apart from the SPD 1. In addition, the SPD 1 having the structure of the ninth embodiment is used as the SPD for polarized light, rather than the polarizing plate and may be oppositely disposed to be orthogonal to the YZ electrode pair 12.

The above embodiments of the invention as well as the appended claims show multiple features in specific combinations. The skilled person will easily be able to consider further combinations or sub-combinations of these features. The scope of the invention is defined in the appended claims.

## Claims

1. A suspended particle device comprising:
a first substrate (2) and a second substrate (3);
a cell comprising
a first electrode (6), a second electrode (7) and a third electrode (8); and
a suspension (9) disposed between the first substrate (2) and the second substrate (3),
wherein the first electrode (6) of the cell is formed on the first substrate (2),
the second electrode (7) of the cell and the third electrode (8) of the cell are formed on the second substrate (3),
the suspension (9) includes light-control particles (10) and a disperse medium (11),
the light-control particles (10) are charged,
wherein the suspended particle device is configured to control
an orientation state of the light-control particles (10) by applying AC voltage to at least any one of the first electrode (6), the second electrode (7), and the third electrode (8), in such a way that
the light-control particles (10) being dispersed in the suspension (9) or being biased to the third electrode (8) by applying DC voltage to at least one of the first electrode (6), the second electrode (7), and the third electrode (8),
wherein
the light control particles have an optical anisotropy, wherein an aspect ratio of the light control particles (10) is in a range between 5 and 30.

2. The suspended particle device according to claim 1,
wherein the third electrode (8) is sandwiched into the second electrode(7) in a minor axis direction, wherein the width of the minor-axis direction of the third electrode (8) is smaller than the with of the minor-axis direction of the second electrode (7).

3. The suspended particle device according to one of the preceding claims,
wherein
the light-control particles (10) are in a rod shape, and
the light-control particles (10) are composed of at least one of polyperiodide, a polymer, a carbon-base material, a metal material, and an inorganic compound.

4. The suspended particle device according to one of the preceding claims,
wherein the light-control particles (10) are charged with negative charges,
wherein the suspended particle device is configured to bias the light-control particles (10) to the third electrode (8) by making the potential of the third electrode (8) larger than the potential of the first electrode (6) and the potential of the second electrode (7), and to disperse the light-control particles (10) biased to the third electrode (8) in the suspension (9) by making the potential of the first electrode (6) larger than the potential of the third electrode (8).

5. The suspended particle device according to one of the preceding claims,
wherein an electrification control agent is added to the suspension (9), and
the electrification control agent is a metal salt of fatty acid.

6. The suspended particle device according to one of the preceding claims, wherein the suspended particle device is configured to apply a DC voltage to the third electrode (8) at a predetermined interval when the light-control particles (10) are biased to the third electrode (8).

7. The suspended particle device according to one of the preceding claims, wherein the suspended particle device is configured to disperse the particles biased to the third electrode (8) in the disperse medium (11) by applying an AC voltage to at least one of the first electrode (6), the second electrode (7), and the third electrode (8) when the light-control particles (10) are biased to the third electrode (8).

8. The suspended particle device according to one of the preceding claims, further comprising a dielectric layer (24) covering the third electrode (8).

9. The suspended particle device according to claim 8,
wherein on the third electrode (8) an apertural area is formed in the dielectric layer (24), and
wherein the suspended particle device is configured to bias the light-control particles (10) to the apertural area of the dielectric layer.

10. The suspended particle device according to claim 9,
wherein the second electrode (7) is formed on the dielectric layer (24),
the apertural area is formed in the second electrode (7) on the third electrode (8), and
wherein the suspended particle device is configured to bias the light-control particles (10) to the apertural area in the second electrode (7).

11. The suspended particle device according to one of the preceding claims,
wherein a plurality of ribs (25) is formed between the first substrate and the second substrate, and
the second electrode (7) and the third electrode (8) are formed in each space partitioned by the plurality of ribs (25).

12. The suspended particle device according to one of the preceding claims,
wherein the second electrode (7) and the third electrode (8) are formed in a stripe shape, and
wherein the suspended particle device is configured to control the orientation state of the light-control particles (10) by applying an AC voltage between the second electrode (7) and the third electrode (8).

13. The suspended particle device according to one of the preceding claims, wherein the suspended particle device is configured to polarize light incident to the suspension by the light-control particles (10), when an AC voltage is applied between the second electrode (7) and the third electrode (8).

14. A light control device, comprising:
the suspended particle device (1) according to claim 1; and
a drive device (14) that controls the suspended particle device (1).

15. A driving method of driving a suspended particle device according to claim 1,
the method including controlling an orientation state of the light-control particles (10) by applying an AC voltage to at least any one of the first electrode (6), the second electrode (7), and the third electrode (8).

## Patentansprüche

1. Schwebstoffvorrichtung, welche Folgendes umfasst: ein erstes Substrat (2) sowie ein zweites Substrat (3); eine Zelle, welche eine erste Elektrode (6) umfasst, eine zweite Elektrode (7) und eine dritte Elektrode (8); sowie eine Suspension (9), welche zwischen dem ersten Substrat (2) und dem zweiten Substrat (3) angeordnet ist, wobei die erste Elektrode (6) der Zelle auf dem ersten Substrat (2) ausgebildet ist, die zweite Elektrode (7) der Zelle und die dritte Elektrode (8) der Zelle auf dem zweiten Substrat (3) ausgebildet sind, die Suspension (9) Lichtsteuerungspartikel (10) sowie ein Dispersionsmedium (11) beinhaltet, die Lichtsteuerungspartikel (10) aufgeladen werden, wobei die Schwebstoffvorrichtung derart konfiguriert ist, dass sie den Orientierungszustand der Lichtsteuerungspartikel (10) steuert, indem sie eine Wechselspannung an mindestens einer der folgenden Elektroden anlegt: an der ersten Elektrode (6), der zweiten Elektrode (7) oder der dritten Elektrode (8), derart, dass die Lichtsteuerungspartikel (10) in die Suspension (9) dispergiert werden oder durch das Anlegen einer Gleichspannung an mindestens einer der folgenden Elektroden: an der ersten Elektrode (6), der zweiten Elektrode (7) oder der dritten Elektrode (8) in Richtung der dritten Elektrode (8) abgelenkt werden, wobei die Lichtsteuerungspartikel eine optische Anisotropie aufweisen, wobei das Längenverhältnis der Lichtsteuerungspartikel (10) in einem Bereich zwischen 5 und 30 liegt.

2. Die Schwebstoffvorrichtung nach Anspruch 1, wobei die dritte Elektrode (3) in Nebenachsenrichtung in die zweite Elektrode (7) eingebettet ist, wobei die Breite der Nebenachsenrichtung der dritten Elektrode (8) kleiner ist als die Breite der Nebenachsenrichtung der zweiten Elektrode (7).

3. Die Schwebstoffvorrichtung nach einem der vorangehenden Ansprüche, wobei die Lichtsteuerungspartikel (10) eine Stabform aufweisen, und wobei die Lichtsteuerungspartikel (10) aus mindestens einem der folgenden Materialien bestehen: Polyperiodide, Polymere, kohlenstoffbasierte Materialien, metallische Werkstoffe und anorganische Verbindungen.

4. Die Schwebstoffvorrichtung nach einem der vorangehenden Ansprüche, wobei die Lichtsteuerungspartikel (10) mit negativen Ladungen geladen sind, wobei die Schwebstoffvorrichtung derart konfiguriert ist, dass sie die Lichtsteuerungspartikel (10) in Richtung der dritten Elektrode (8) ablenkt, indem sie das Potential der dritten Elektrode (8) größer macht als das Potential der ersten Elektrode (6) und das Potential der zweiten Elektrode (7), und derart, dass die Lichtsteuerungspartikel (10), welche in Richtung der dritten Elektrode (8) abgelenkt werden, in der Suspension (9) dispergiert werden, indem sie das Potential der ersten Elektrode (6) größer macht als das Potential der dritten Elektrode (8).

5. Die Schwebstoffvorrichtung nach einem der vorangehenden Ansprüche, wobei der Suspension (9) ein Elektrisierungssteuermittel hinzugefügt wird und wobei es sich bei dem Elektrisierungssteuermittel um ein Metallsalz von einer Fettsäure handelt.

6. Die Schwebstoffvorrichtung nach einem der vorangehenden Ansprüche, wobei die Schwebstoffvorrichtung derart konfiguriert ist, dass sie, wenn die Lichtsteuerungspartikel (10) in Richtung der dritten Elektrode (8) abgelenkt werden, in einem vorbestimmten Intervall eine Gleichspannung an der dritten Elektrode (8) anlegt.

7. Die Schwebstoffvorrichtung nach einem der vorangehenden Ansprüche, wobei die Schwebstoffvorrichtung derart konfiguriert ist, dass sie die Partikel, die in Richtung der dritten Elektrode (8) abgelenkt werden, in das Dispersionsmedium (11) dispergiert, indem sie eine Wechselspannung an mindestens einer der folgenden Elektroden anlegt: an der ersten Elektrode (6), der zweiten Elektrode (7) oder der dritten Elektrode (8), wenn die Lichtsteuerungspartikel (10) in Richtung der dritten Elektrode (8) abgelenkt werden.

8. Die Schwebstoffvorrichtung nach einem der vorangehenden Ansprüche, welche weiter eine dielektrische Schicht (24) aufweist, welche die dritte Elektrode (8) bedeckt.

9. Die Schwebstoffvorrichtung nach Anspruch 8, wobei auf der dritten Elektrode (8) in der dielektrischen Schicht (24) ein Blendenbereich ausgebildet ist, und wobei die Schwebstoffvorrichtung derart konfiguriert ist, dass sie die Lichtsteuerungspartikel (10) in Richtung des Blendenbereichs der dielektrischen Schicht (24) ablenkt.

10. Die Schwebstoffvorrichtung nach Anspruch 9, wobei die zweite Elektrode (7) auf der dielektrischen Schicht (24) ausgebildet ist, der Blendenbereich in der zweiten Elektrode (7) auf der dritten Elektrode (8) ausgebildet ist, und wobei die Schwebstoffvorrichtung derart konfiguriert ist, dass sie die Lichtsteuerungspartikel (10) in Richtung des Blendenbereichs der zweiten Elektrode (7) ablenkt.

11. Die Schwebstoffvorrichtung nach einem der vorangehenden Ansprüche, wobei zwischen dem ersten Substrat und dem zweiten Substrat eine Mehrzahl von Rippen (25) ausgebildet ist, und die zweite Elektrode (7) und die dritte Elektrode (8) in den jeweiligen Zwischenräumen ausgebildet sind, welche durch die Mehrzahl von Rippen (25) voneinander getrennt sind.

12. Die Schwebstoffvorrichtung nach einem der vorangehenden Ansprüche, wobei die zweite Elektrode (7) und die dritte Elektrode (8) in Streifenform ausgebildet sind, und wobei die Schwebstoffvorrichtung derart konfiguriert ist, dass sie den Orientierungszustand der Lichtsteuerungspartikel (10) steuert, indem sie eine Wechselspannung zwischen der zweiten Elektrode (7) und der dritten Elektrode (8) anlegt.

13. Die Schwebstoffvorrichtung nach einem der vorangehenden Ansprüche, wobei die Schwebstoffvorrichtung derart konfiguriert ist, dass sie den Lichteinfall in die Suspension durch die Lichtsteuerpartikel (10) polarisiert, wenn zwischen der zweiten Elektrode (7) und der dritten Elektrode (8) eine Wechselspannung angelegt wird.

14. Lichtsteuereinheit, welche Folgendes umfasst: die Schwebstoffvorrichtung nach Anspruch 1; sowie eine Ansteuerungsvorrichtung (14), welche die Schwebstoffvorrichtung (1) steuert.

15. Ansteuerungsverfahren zum Ansteuern der Schwebstoffvorrichtung nach Anspruch 1, wobei das Verfahren die Steuerung des Orientierungszustands der Lichtsteuerungspartikel (10) beinhaltet, indem eine Wechselspannung an mindestens einer der folgenden Elektroden angelegt wird: an der ersten Elektrode (6), der zweiten Elektrode (7) oder der dritten Elektrode (8).

## Revendications

1. Dispositif à particules en suspension comprenant :
un premier substrat (2) et un deuxième substrat (3) ;
une cellule comprenant une première électrode (6), une deuxième électrode (7) et une troisième électrode (8) ; et
une suspension (9) disposée entre le premier substrat (2) et le deuxième substrat (3),
dans lequel la première électrode (6) de la cellule est formée sur le premier substrat (2), la deuxième électrode (7) de la cellule et la troisième électrode (8) de la cellule sont formées sur le deuxième substrat (3),
la suspension (9) comprend des particules de contrôle de lumière (10) et un milieu de dispersion (11),
les particules de contrôle de lumière (10) sont chargées,
dans lequel le dispositif à particules en suspension est conçu pour contrôler un état d'orientation des particules de contrôle de lumière (10) par application d'une tension alternative à au moins l'une quelconque de la première électrode (6), la deuxième e électrode (7), et la troisième électrode (8), de telle sorte que les particules de contrôle de lumière (10) étant dispersées dans la suspension (9) ou étant orientées vers la troisième électrode (8) par application d'une tension continue à au moins l'une de la première électrode (6), la deuxième électrode (7), et la troisième électrode (8),
dans lequel les particules de contrôle de lumière présentent une anisotropie optique, dans lequel un rapport d'aspect des particules de contrôle de lumière (10) se situe dans une plage comprise entre 5 et 30.

2. Dispositif à particules en suspension selon la revendication 1, dans lequel la troisième électrode (8) est intercalée dans la deuxième électrode (7) dans une direction d'axe mineur, dans lequel la largeur de la direction d'axe mineur de la troisième électrode (8) est plus petite que la largeur de la direction d'axe mineur de la deuxième électrode (7).

3. Dispositif à particules en suspension selon l'une quelconque des revendications précédentes, dans lequel les particules de contrôle de lumière (10) sont en forme de bâtonnet, et les particules de contrôle de lumière (10) sont composées d'au moins un élément parmi un polyperiodure, un polymère, un matériau à base de carbone, un matériau métallique et un composé inorganique.

4. Dispositif à particules en suspension selon l'une quelconque des revendications précédentes,
dans lequel les particules de contrôle de lumière (10) sont chargées avec des charges négatives,
dans lequel le dispositif à particules en suspension est conçu pour orienter les particules de contrôle de lumière (10) vers la troisième électrode (8) en rendant le potentiel de la troisième électrode (8) supérieur au potentiel de la première électrode (6) et au potentiel de la deuxième électrode (7), et pour disperser les particules de contrôle de lumière (10) orientées vers la troisième électrode (8) dans la suspension (9) en rendant le potentiel de la première électrode (6) supérieur au potentiel de la troisième électrode (8).

5. Dispositif à particules en suspension selon l'une quelconque des revendications précédentes, dans lequel un agent de contrôle d'électrification est ajouté à la suspension (9), et l'agent de contrôle d'électrification est un sel métallique d'acide gras.

6. Dispositif à particules en suspension selon l'une quelconque des revendications précédentes, dans lequel le dispositif à particules en suspension est conçu pour appliquer une tension continue à la troisième électrode (8) à un intervalle prédéterminé lorsque les particules de contrôle de lumière (10) sont orientées vers la troisième électrode (8).

7. Dispositif à particules en suspension selon l'une quelconque des revendications précédentes, dans lequel le dispositif à particules en suspension est conçu pour disperser les particules orientées vers la troisième électrode (8) dans le milieu de dispersion (11) par application d'une tension alternative à au moins l'une de la première électrode (6), la deuxième électrode (7), et la troisième électrode (8) lorsque les particules de contrôle de lumière (10) sont orientées vers la troisième électrode (8).

8. Dispositif à particules en suspension selon l'une quelconque des revendications précédentes, comprenant en outre une couche diélectrique (24) recouvrant la troisième électrode (8).

9. Dispositif à particules en suspension selon la revendication 8,
dans lequel sur la troisième électrode (8) une zone d'ouverture est formée dans la couche diélectrique (24), et
dans lequel le dispositif à particules en suspension est conçu pour orienter les particules de contrôle de lumière (10) vers la zone d'ouverture de la couche diélectrique.

10. Dispositif à particules en suspension selon la revendication 9,
dans lequel la deuxième électrode (7) est formée sur la couche diélectrique (24), la zone d'ouverture est formée dans la deuxième électrode (7) sur la troisième électrode (8), et
dans lequel le dispositif à particules en suspension est conçu pour orienter les particules de contrôle de lumière (10) vers la zone d'ouverture dans la deuxième électrode (7).

11. Dispositif à particules en suspension selon l'une quelconque des revendications précédentes,
dans lequel une pluralité de nervures (25) est formée entre le premier substrat et le deuxième substrat, et la deuxième électrode (7) et la troisième électrode (8) sont formées dans chaque espace partitionné par la pluralité de nervures (25).

12. Dispositif à particules en suspension selon l'une quelconque des revendications précédentes,
dans lequel la deuxième électrode (7) et la troisième électrode (8) sont formées en forme de bandes, et
dans lequel le dispositif à particules en suspension est conçu pour contrôler l'état d'orientation des particules de contrôle de lumière (10) par application d'une tension alternative entre la deuxième électrode (7) et la troisième électrode (8).

13. Dispositif à particules en suspension selon l'une quelconque des revendications précédentes, dans lequel le dispositif à particules en suspension est conçu pour polariser la lumière incidente sur la suspension par les particules de contrôle de lumière (10), quand une tension alternative est appliquée entre la deuxième électrode (7) et la troisième électrode (8).

14. Dispositif de contrôle de lumière, comprenant :
le dispositif à particules en suspension (1) selon la revendication 1 ; et
un dispositif d'entraînement (14) qui commande le dispositif à particules en suspension (1).

15. Procédé de commande de commande d'un dispositif à particules en suspension selon la revendication 1, le procédé comprenant le contrôle d'un état d'orientation des particules de contrôle de lumière (10) par application d'une tension alternative à au moins l'une quelconque de la première électrode (6), la deuxième électrode (7), et la troisième électrode (8).
